# EUROPÄISCHE PATENTSCHRIFT

(11) **EP 3 574 398 B1**
(45) Veröffentlichungstag und Bekanntmachung des Hinweises auf die Patenterteilung: **29.07.2020**
(21) Anmeldenummer: 18816123.6
(22) Anmeldetag: 18.12.2018
(51) Int. Cl.: G06F 3/0488, G06F 3/044, G06F 3/03, G06F 3/0354

(54) **STEUER- UND VERARBEITUNGSEINHEIT FÜR EINEN BERÜHRUNGSEMPFINDLICHEN BILDSCHIRM, SYSTEM DAMIT UND VERFAHREN ZUR VERWENDUNG**
CONTROL AND PROCESSING UNIT FOR A TOUCH-SENSITIVE SCREEN, SYSTEM INCLUDING THE SAME AND METHOD OF USE
UNITÉ DE COMMANDE ET DE TRAITEMENT POUR UN ÉCRAN TACTILE, SYSTÈME CORRESPONDANT ET PROCÉDÉ D'UTILISATION

(30) Priorität: 20.04.2018 EP 18168536
(43) Veröffentlichungstag der Anmeldung: 04.12.2019
(73) Patentinhaber: Interactive Scape GmbH, 10179 Berlin (DE)
(72) Erfinder: PETERS, Günther Paul, 10437 Berlin (DE); EWERLING, Philipp, 10318 Berlin (DE); MANGOLD, Ulrich, 10997 Berlin (DE); HELMER, Hauke, 10115 Berlin (DE)
(74) Vertreter: Pfenning, Meinig & Partner mbB
(86) Internationale Anmeldenummer: PCT/EP2018/085509
(87) Internationale Veröffentlichungsnummer: WO 2019/201464

(56) Entgegenhaltungen:
- DE-U1-202012 103 377
- US-A1- 2012 327 013
- US-A1- 2015 065 046

## Beschreibung

Die Erfindung betrifft eine Steuer- und Verarbeitungseinheit für einen berührungsempfindlichen Bildschirm gemäß dem Hauptanspruch sowie ein System, das eine solche Steuer- und Verarbeitungseinheit umfasst, und ein Verfahren zu ihrer Verwendung.

Heutzutage kommen in verschiedenen Bereichen berührungsempfindliche Bildschirme (Touchscreens) zum Einsatz. Berührungsempfindliche Bildschirme werden beispielsweise in Smartphones, Tablet-PCs und in verschiedensten Automaten eingesetzt. Ein Vorteil dieser berührungsempfindlichen Bildschirme ist, dass sowohl eine Eingabe als auch eine Ausgabe über den Bildschirm erfolgen kann. Berührungsempfindliche Bildschirme sind typischerweise in der Lage, zu detektieren, an welcher Stelle der Bildschirm mit einem Finger berührt wird.

In vielen berührungsempfindlichen Bildschirmen kommen kapazitive Touchscreens zum Einsatz. Hierbei liegen in einem Glas zwei quer zueinander ausgerichtete Gitter aus durchsichtigen elektrischen Leitungen. Das obere der beiden Leitungsgitter sendet stetig elektrische Signale zum unteren Gitter. Wird der Bildschirm mit einem Finger berührt, verändert sich eine elektrische Kapazität der dazwischenliegenden isolierenden Schicht, und ein Signal wird an dieser Stelle schwächer. Ein Prozessor errechnet dann eine Position, an der das Signal abgefallen ist, und gibt Ort und Dauer der Berührung an eine Software des Geräts weiter. Diese wiederum führt dann eine entsprechende Aktion auf die Berührung hin aus.

Derartige kapazitive berührungsempfindliche Bildschirme, die oft außerdem eine Vielzahl von Berührungen gleichzeitig detektieren können (Multitouch-Displays) sind üblicherweise nicht dazu ausgelegt, passive Objekte, die auf den berührungsempfindlichen Bildschirm gestellt werden, zu detektieren. Im Gegenteil umfassen derartige Systeme typischerweise Filter, um Berührungsdaten, die durch passive Objekte ausgelöst werden, aktiv herauszufiltern.

In der Literatur werden passive Eingabeeinheiten vorgeschlagen, die durch einen berührungsempfindlichen Bildschirm detektierbar sind, bzw. Verfahren vorgeschlagen, in denen passive Eingabeeinheiten mittels eines berührungsempfindlichen Bildschirms detektierbar sind.

Die US 2010/0149119 A1 bezieht sich auf eine Informationsverarbeitungsvorrichtung, die eine Kapazitätsänderung eines kapazitiven Touchscreens überwacht. Die Kapazitätsänderung wird dabei durch ein leitendes Material verursacht, in welches Musterinformationen, wie z.B. ein QR-Code kodiert sein können.

Dokument US 2012 327013 A1 zeigt ein elektronisches Gerät mit leitfähigen Höckern auf einer seiner Oberflächen, welches verwendet werden kann, um den Betrieb an einem anderen Gerät mit einem Touchpanel zu initiieren. Das elektronische Gerät umfasst ein Gerätegehäuse, eine erste Oberfläche, die mit dem Vorrichtungsgehäuse gekoppelt ist, und eine Vielzahl von leitfähigen Höckern auf der ersten Oberfläche, wobei die leitfähigen Höcker so konfiguriert sind, dass sie durch ein kapazitives Berührungsfeld einer Berührungserfassungsvorrichtung detektierbar sind, wenn sie mit dem kapazitiven Berührungsfeld in Kontakt gebracht werden.

Dokument DE 20 2012 103377 U1 zeigt einen Berührungssensor, der ein Substrat umfasst, sowie eine Vielzahl von Berührungselektroden, die mit dem Substrat verbunden sind. Außerdem weist der Berührungssensor eine Steuereinrichtung auf, die kommunikativ mit der Vielzahl von Berührungselektroden verbunden ist, wobei die Steuereinrichtung betrieben werden kann, um mit einem zweiten Berührungssensor durch periodisches Horchen auf ein Synchronisationssignal, das durch den zweiten Berührungssensor gesendet wird, zu kommunizieren, wobei das Horchen das Erfassen von Kapazitätsänderungen an einer oder mehreren aus der Vielzahl von Berührungselektroden umfasst. Ferner wird eine Kommunikationssitzung mit dem zweiten Berührungssensor nach dem Empfangen des Synchronisationssignals hergestellt und es werden nach dem Herstellen der Kommunikationssitzung Daten unter Verwendung von einer oder mehreren aus der Vielzahl von Berührungselektroden zu dem zweiten Berührungssensor gesendet.

Aus Dokument US 2015/065046 A1 sind ein Verfahren und eine Vorrichtung bekannt, bei denen ein lokalisierter Bereich eines Berührungsbildschirms auf eine Vielzahl von Sensoreingaben überwacht wird, zum Identifizieren eines Kameraprofils von mindestens einem Benutzergerät. In Reaktion auf das Identifizieren des Kameraprofils wird ein lokaler visueller Datenaustausch durch Anzeigen von Daten innerhalb eines durch das Kameraprofil definierten Bereichs initiiert. Um eine sichere Kommunikation aufrechtzuerhalten, überwacht die Erfindung periodisch den lokalisierten Bereich des Berührungsbildschirms auf die Vielzahl von Sensoreingaben, die während des lokalisierten visuellen Datenaustauschs als das Kameraprofil identifiziert werden.

Für eine reibungslose Bedienung eines berührungsempfindlichen Bildschirms mittels einer Eingabeeinheit sollten mindestens eine oder zwei oder mehr der folgenden Bedingungen erfüllt sein:
1. Es sollte feststellbar sein, ob Eingabeeinheiten sich im Moment auf dem berührungsempfindlichen Bildschirm befinden oder nicht, und zwar unabhängig davon, ob sie durch einen Benutzer angefasst werden oder nicht und unabhängig davon, wie deren Position und Orientierung auf dem berührungsempfindlichen Bildschirm ist.
2. Jede Eingabeeinheit sollte eindeutig identifizierbar sein.
3. Eine genaue Position und/oder Orientierung der Eingabeeinheit oder der Eingabeeinheiten sollte bestimmbar sein.
4. Eine Veränderung der Position und Orientierung sich schnell bewegender Eingabeeinheiten sollte ohne spürbare Verzögerung detektierbar sein.

Es hat sich herausgestellt, dass viele im Stand der Technik gezeigte Systeme zumindest eine oder mehr als eine bzw. alle dieser vier Bedingungen nicht oder nicht zufriedenstellend zu erfüllen vermögen.

Aufgabe der Erfindung ist es, eine Steuer- und Verarbeitungseinheit für einen berührungsempfindlichen Bildschirm vorzuschlagen, die die beschriebenen Nachteile des Standes der Technik überwindet. Außerdem ist es Aufgabe der Erfindung, ein Verfahren zur Verwendung eines berührungsempfindlichen Bildschirms bereitzustellen, das die Nachteile des Standes der Technik zumindest teilweise zu überwinden vermag.

Die Aufgabe wird gelöst durch eine Steuer- und Verarbeitungseinheit mit den Merkmalen des Hauptanspruchs sowie ein System und ein Verfahren mit den Merkmalen der Nebenansprüche. Weiterbildungen ergeben sich aus den Merkmalen der abhängigen Ansprüche sowie aus der Beschreibung und den Figuren.

Eine solche Steuer- und Verarbeitungseinheit für einen berührungsempfindlichen Bildschirm umfasst eine Kommunikationseinheit und einen Speicher.

Die Steuer- und Verarbeitungseinheit ist dazu eingerichtet, erste Sensordaten, die mittels kapazitiver Sensoren des berührungsempfindlichen Bildschirms detektiert werden, zu empfangen. Mit den kapazitiven Sensoren können Kapazitätsänderungen detektiert werden, die durch leitende Strukturen von den Bildschirm kontaktierenden Objekten oder von auf den Bildschirm aufgelegten Objekten versursacht werden. Diese Detektion umfasst typischerweise eine ortsaufgelöste Bestimmung der Größe der so verursachten Kapazitätsänderungen.

Weiterhin ist die Steuer- und Verarbeitungseinheit dazu eingerichtet, zweite Sensordaten zu empfangen, die von einer Eingabeeinheit an die Steuer- und Verarbeitungseinheit übermittelt werden. Die zweiten Sensordaten umfassen Daten eines Sensors der Eingabeeinheit, der dazu ausgebildet ist, ein Ablegen der Eingabeeinheit zu detektieren.

Die Steuer- und Verarbeitungseinheit ist dazu eingerichtet, anhand eines zeitlichen Verlaufs der ersten und zweiten Sensordaten zu überprüfen, ob zeitgleich mit einem Auflegen eines Objekts mit einer leitenden Struktur auf den berührungsempfindlichen Bildschirm ein Ablegen der Eingabeeinheit detektiert wurde. So kann festgestellt werden, ob die Eingabeeinheit auf dem Bildschirm abgelegt wurde, ob es sich also bei der detektierten leitenden Struktur um eine leitende Struktur der Eingabeeinheit, und somit bei dem aufgelegten Objekt um die Eingabeeinheit handelt.

Die Steuer- und Verarbeitungseinheit erstellt und speichert dann ein Kapazitätsmuster für die leitende Struktur der Eingabeeinheit, wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält.

Wenn die Kontaktierung des Bildschirms und das Ablegen der Eingabeeinheit gleichzeitig detektiert wurden, stellt die Steuer- und Verarbeitungseinheit einen Kopplungsmodus für die Eingabeeinheit her, indem sie Daten an die Eingabeeinheit sendet oder indem Sie Daten an die Eingabeeinheit sendet und Daten von der Eingabeeinheit empfängt.

Durch die kapazitiven Sensoren wird eine Erfassung von Größen von Kapazitätsänderungen, die an unterschiedlichen Orten in unterschiedlicher Stärke durch die leitende Struktur ausgelöst werden, ermöglicht. Somit können in dem Kapazitätsmuster, ähnlich wie bei einem Graustufenbild, Magnituden der Kapazitätsänderungen an verschiedenen Orten abgebildet werden und nicht nur ein Ort, an dem eine Kapazitätsänderung auftritt. Das Kapazitätsmuster umfasst also, wie erwähnt, mindestens zwei verschieden große Kapazitätsänderungen an unterschiedlichen Orten und enthält ihre relative Position, also beispielsweise ihren Abstand. Die mindestens zwei verschiedenen Kapazitätsänderungen enthalten in der Regel also zumindest die Informationen aus zwei verschiedenen Schwarz-Weiß-Bildern mit unterschiedlichen Kapazitätsänderungs-Schwellen. In möglichen Ausführungen werden die Kapazitätsmuster als Graustufenbild mit mindestens zwei Graustufen oder als mindestens zwei Schwarz-Weiß Bilder mit unterschiedlichen Schwellen gespeichert.

Durch eine Steuer- und Verarbeitungseinheit mit den beschriebenen Merkmalen ist es insbesondere möglich, als Eingabeeinheit ein elektronisches Gerät, wie beispielsweise ein Mobiltelefon oder ein Tablet oder ein vergleichbares Gerät, einzusetzen. Dabei ist es durch die beschriebene Erfassung der Kapazitätsmuster möglich, das Gerät zu verwenden, ohne es baulich modifizieren zu müssen, also ohne dass z.B. ein Gehäuse verändert oder eine Hülle angebracht werden muss.

Weiterhin können die in derartigen elektronischen Geräten typischerweise vorhandenen Sensoren, z.B. Beschleunigungssensoren, für die Erhebung der zweiten Sensordaten verwendet werden.

Damit werden die Nachteile des Standes der Technik zumindest teilweise auch bei Verwendung eines unmodifizierten Mobiltelefons oder Tablets als Eingabeeinheit überwunden und es sind zur Bedienung des berührungsempfindlichen Bildschirms keine speziell gefertigten Eingabeeinheiten nötig.

Hierbei können zur Einstellung der Schwellen beispielsweise sogenannte Adaptive Thresholding-Verfahren zum Einsatz kommen, wobei ein Schwellenwert für einen Pixel aus Signalen aus der Umgebung des Pixels errechnet wird. Derartige Verfahren ermöglichen insbesondere eine Erkennung mehrerer Eingabeeinheiten (weiter unten wird diese Möglichkeit ausführlich erläutert), wenn deren leitende Strukturen aufgrund ihrer Ausgestaltung oder aufgrund ihrer Ausrichtung bezüglich des Gitters des berührungsempfindlichen Bildschirms verschieden starke Signale auslösen. Es ist auch möglich durch Adaptive Thresholding unterschiedliche Bereiche einer einzigen Eingabeeinheit, in denen die Leitende Struktur der Eingabeeinheit unterschiedlich starke Signale erzeugt, mit einem unterschiedlichen Threshold zu detektieren.

Der berührungsempfindliche Bildschirm kann dazu eingerichtet sein, Kapazitätsänderungen von 10 pF oder weniger zu erfassen. Beispielsweise sind in möglichen Ausführungen Kapazitätsänderungen von 3 pF, vorzugsweise von 1 pF, besonders bevorzugt von 0.1 pF detektierbar. Eine Glasdicke des Berührungsempfindlichen Bildschirms kann beispielsweise 4 mm oder weniger betragen. Dadurch wird es ermöglicht, Eingabeeinheiten bzw. deren leitende Strukturen auch durch eine Hülle hindurch zu detektieren. Ferner kann es dadurch ermöglicht werden, die Eingabeeinheit unabhängig von ihrer Orientierung zuverlässig zu detektieren, das heißt, auch wenn sich zufällig aufgrund der Ausrichtung der leitenden Struktur relativ zu den Messpunkten bzw. den Gittern des berührungsempfindlichen Bildschirms ein schwaches Signal ergibt.

Damit wird durch das Kapazitätsmuster ein differenziertes charakteristisches Bild der leitenden Struktur erfasst, was einerseits, ähnlich wie ein Fingerabdruck, ein Erkennungsmerkmal darstellt, und andererseits eine Verfolgung auf dem Bildschirm und eine Detektion einer Orientierung auf dem Bildschirm ermöglicht. Eine Analyse und Verarbeitung der so gespeicherten bzw. verfolgten Kapazitätsmuster kann mit Methoden der Bildverarbeitung durch die Steuer- und Verarbeitungseinheit vorgenommen werden. Zur Bestimmung des beschriebenen Kapazitätsmusters werden die Positionen der hervorgerufenen Kapazitätsänderungen zumindest relativ zueinander erfasst.

Durch die beschriebene Analyse der ersten und zweiten Sensordaten bzw. den Vergleich der ersten und zweiten Sensordaten kann, wie erwähnt, verifiziert werden, dass es sich bei dem aufgelegten Objekt mit der leitenden Struktur um die abgelegte Eingabeeinheit handelt. Die Verifikation der Eingabeeinheit wird also durch den physischen Prozess des Auflegens erreicht. Dies kann gegenüber einfachen Kopplungsmechanismen, wie bspw. dem Herstellen einer Bluetoothverbindung (Pairing) ein gewünschtes Sicherheitsfeature darstellen, welches durch die vorgeschlagene Vorrichtung erreicht wird.

Ist die Eingabeeinheit verifiziert und befindet sich im Kopplungsmodus, ergeben sich aus den ersten und zweiten Sensordaten ergänzende und/oder redundante oder teilweise redundante Informationen über die Eingabeeinheit, die von der Steuer- und Verarbeitungseinheit genutzt bzw. in damit ausgeführten entsprechenden Verfahren verwendet werden. Redundanz ist dabei insbesondere für das Herstellen des Kopplungsmodus bzw. die Verifikation relevant. Das wurde im Zusammenhang des Überprüfens, ob das Ablegen und das Auflegen gleichzeitig stattgefunden haben, erläutert. Ergänzende Daten können dazu dienen, Aktionen mit höherer Genauigkeit oder Zuverlässigkeit zu erfassen nachdem der Kopplungsmodus hergestellt ist. Dieser Aspekt wird später noch weiter ausgeführt.

Typischerweise werden Kapazitätsänderungen, die von einer einzigen Eingabeeinheit ausgelöst werden, an mehr als zwei Orten detektiert. Zum Beispiel mit einer Auflösung von mindestens 1 Pixel pro 35 mm² vorzugsweise mit einer Auflösung von mindestens 1 Pixel pro 15 mm², besonders bevorzugt mit einer Auflösung von mindestens 1 Pixel pro 6.8 mm². Beispielsweise kann der Berührungsempfindliche Bildschirm eine Bildschirmdiagonale von zwischen 10 und 100 Zoll aufweisen. In einer Ausführung hat der berührungsempfindliche Bildschirm eine Bildschirmdiagonale 55 Zoll, mit Abmessungen von 1220mm x 680 mm und verfügt über 172 x 105 Pixel, an denen die ersten Sensordaten erhoben und somit die leitende Struktur der Eingabeeinheit detektiert werden kann.

Die leitende Struktur, die von den Sensoren des berührungsempfindlichen Bildschirms detektierbar ist, umfasst elektrisch leitende Komponenten der Eingabeeinheit. Wie eingangs erwähnt, können kapazitive Sensoren bestimmte Strukturen detektieren, auch wenn sie nicht angefasst werden (passiv). Es hat sich herausgestellt, dass mit der vorgeschlagenen Steuer- und Verarbeitungseinheit für den berührungsempfindlichen Bildschirm leitende Strukturen eines Mobiltelefons, eines Tablets oder anderer elektronischer Geräte erfasst werden können und ihr Kapazitätsmuster aufgenommen werden kann, auch wenn das Gerät nicht berührt wird. Das wird insbesondere durch die hier beschriebene Ausgestaltung des Kapazitätsmusters und die beschriebene Verwendung der kapazitiven Sensoren erreicht. In typischen Fällen, handelt es sich bei der Eingabeeinheit um ein Mobiltelefon oder ein Tablet. Es sei angemerkt, dass wenn im Folgenden von einem Mobiltelefon die Rede ist, immer auch andere elektronische Geräte, die im Sinne dieser Erfindung ähnlich aufgebaut oder eingerichtet sind, gemeint sind, wie zum Beispiel Tablets. Die Ähnlichkeit der Geräte bezieht sich hierbei auf die Interaktion des jeweiligen elektronischen Geräts mit den Sensoren des berührungsempfindlichen Bildschirms und mit der Steuer- und Verarbeitungseinheit. Die leitenden Strukturen eines Mobiltelefons oder Tablets, die wie oben beschrieben erfasst werden, und einen Fingerabdruck des Mobiltelefons oder Tablets darstellen, sind zum Beispiel Leiterbahnen, Teile einer Kamera des Mobiltelefons oder Tablets, Teile einer Batterie des Mobiltelefons oder Tablets oder Teile eines Gehäuses des Mobiltelefons oder Tablets. Die detektierten Strukturen können also innerhalb eines Gehäuses liegen und haben selbst in typischen Fällen keinen direkten Kontakt zu dem berührungsempfindlichen Bildschirm.

Wie erwähnt, sind die Eingabeeinheit oder das Mobiltelefon passive Eingabegeräte im obigen Sinne. Gleichwohl sind die durch die leitenden Strukturen des Mobiltelefons bzw. der Eingabeeinheit ausgelösten Kapazitätsänderungen größer, wenn das Mobiltelefon berührt wird. Typischerweise wird das Kapazitätsmuster direkt beim Auflegen erfasst, wenn die Eingabeeinheit angefasst wird, um einen möglichst guten Kontrast zu erreichen.

Die vorgeschlagene Steuer- und Verarbeitungseinheit kann dazu eingerichtet sein, auch eine Position der abgelegten Eingabeeinheit auf dem berührungsempfindlichen Bildschirm zu bestimmen, wenn die Eingabeeinheit auf dem Bildschirm abgelegt wurde. Das umfasst neben der für das Kapazitätsmuster notwendigen Bestimmung einer relativen Position der durch die Eingabeeinheit hervorgerufenen Kapazitätsänderungen auch eine Bestimmung einer absoluten Position der Eingabeeinheit auf dem berührungsempfindlichen Bildschirm. Dafür wird zumindest ein Punkt des Kapazitätsmusters einem Ort auf dem berührungsempfindlichen Bildschirm, an dem die entsprechende Kapazitätsänderung erfolgt, zugeordnet. Hierfür können entsprechend ein Graustufenbild oder ein oder mehrere Schwarz-Weiß Bilder aufgenommen werden, die nicht nur den Bereich, in dem die Kapazitätsänderungen hervorgerufen werden umfassen, sondern die den ganzen Bildschirm umfassen. Typischerweise wird zur Positionsbestimmung eine Position eines Umrisses oder äußeren Randes der Eingabeeinheit auf dem Bildschirm detektiert. Die Position des Umrisses kann beispielsweise aus einem von mehreren aufgenommenen Schwarz-Weiß Bildern extrahiert werden. Beispielsweise kann eine Detektion des Umrisses aus dem Schwarzweißbild mit dem niedrigsten Schwellenwert erfolgen.

Aus Schwarzweißbildern mit höherem Schwellenwert, bei denen die Struktur in Relation zu dem gesamten Bildschirm erfasst wird, kann dann außer der Position auch noch eine Orientierung der Eingabeeinheit detektiert werden. Je nach Schwellenwert wird ein unterschiedlicher Kontrast und Detailgrad erreicht, so dass es möglich ist, die Strukturen durch zusätzliche Schwellenwerte besser aufzulösen.

Die vorgeschlagene Vorrichtung ermöglicht es, unterschiedliche Strukturen unterschiedlicher Mobiltelefone zu erkennen. Da sich die durch die unterschiedlichen Strukturen der unterschiedlichen Mobiltelefone ausgelösten Kapazitätsänderungen voneinander unterscheiden können, ist typischerweise vorgesehen, dass die Steuer- und Verarbeitungseinheit dazu eingerichtet ist, auf die unterschiedlich starken Kapazitätsänderungen zu reagieren. Es kann vorgesehen sein, dass die Steuer- und Verarbeitungseinheit in ein einem ersten Detektionsschritt ausgebildet ist, vordefinierte Schwellenwerte für die Kapazitätsänderungen zu verwenden.

Die Steuer- und Verarbeitungseinheit kann dazu eingerichtet sein, detektierte Kapazitätsmuster der Eingabeeinheit mit vorbekannten Kapazitätsmustern zu vergleichen. Die Steuer- und Verarbeitungseinheit kann zum Beispiel in einem ersten Schritt ein grobes Kapazitätsmuster mit wenigen Schwellenwerten aufnehmen. Das kann Geschwindigkeitsvorteile mit sich bringen. Aufgenommene Kapazitätsmuster können mit den bekannten Kapazitätsmustern verglichen werden, wobei die bekannten Kapazitätsmuster beispielsweise mit Methoden des maschinellen Lernens erfasst wurden. Das ermöglicht dann beispielsweise eine Bestimmung eines Modells eines Mobiltelefons. So muss die Eingabeeinheit nicht beim Auflegen komplett vermessen werden, sondern nur so weit, bis eine Zuordnung zu einem vorbekannten Modell möglich ist. Daten, die für vorbekannte Modelle im Speicher vorhanden sein können, können dabei zum Beispiel typische Kapazitätsänderungen, die beim Auflegen verursacht werden, und auch weitere Daten umfassen, die bei der Verwendung der Steuer- und Verarbeitungseinheit hilfreich sein können. So kann beispielsweise gespeichert sein, welche Art von Kapazitätsveränderungen für eine bestimmte Eingabeeinheit beim Auflegen, Loslassen, Drehen oder Abheben charakteristisch sind. Die Steuer- und Verarbeitungseinheit verfügt beispielsweise über Informationen darüber, welche Signale eine bestimmte Eingabeeinheit auslöst, wenn sie losgelassen oder bewegt oder gedreht wird, und/oder über Informationen darüber, wie sich ein von einer Eingabeeinheit ausgelöstes Signal abhängig von ihrer Orientierung verändert.

Die Steuer- und Verarbeitungseinheit kann zur Bestimmung einer Orientierung der Eingabeeinheit aus dem Kapazitätsmusters eingerichtet sein. Wie erwähnt, wird die Position der Eingabeeinheit erfasst, indem die absolute Position der durch sie hervorgerufenen Kapazitätsveränderungen in Bezug auf die Gesamtabmessungen des berührungsempfindlichen Bildschirms aus den ersten Sensordaten extrahiert wird. Während für die Bestimmung der Position beispielsweise ein einziges Schwarzweißbild mit niedrigem Schwellenwert bzw. eine Verwendung des niedrigsten Schwellenwerts eines Graustufenbilds notwendig ist, kann es zur Bestimmung der Orientierung nötig sein, mehrere Bilder bzw. Grauwerte zu verwenden oder eines aus mehreren Bildern auszuwählen. Es ist hierfür vorteilhaft, wenn auf dem zur Bestimmung der Orientierung verwendeten Schwarzweißbild oder innerhalb der zur Bestimmung der Orientierung verwendeten Graustufe durch die Kapazitätsänderungen ein Muster mit gebrochener, möglichst niedriger Symmetrie oder Rotationssymmetrie erkennbar ist. Durch Verwendung vorbekannter, mit Hilfe maschinellen Lernens erstellter Daten, kann für ein bestimmtes Modell eines Mobiltelefons a priori bekannt sein, welcher Schwellenwert geeignet ist, um derartige Muster mit möglichst niedriger Symmetrie zu erhalten. Symmetrien müssen dann nicht für eine neu aufgelegte Eingabeeinheit neu untersucht werden, sondern es muss nur die oben beschriebene Identifikation vorgenommen werden. Typischerweise wird die Eingabeeinheit zumindest beim Auflegen und beim Bewegen berührt, so dass zumindest dann die Detektion der Strukturen vereinfacht wird. Dieser Aspekt kann hier ebenfalls ausgenutzt werden.

Die zweiten Sensordaten, die von der Steuer- und Verarbeitungseinheit empfangen werden, können Daten eines Beschleunigungssensors der Eingabeeinheit umfassen. Es ist aber alternativ oder zusätzlich auch möglich, dass die zweiten Sensordaten Daten eines Gyroskops und/oder eines Abstandssensors und/oder eines Farbsensors und/oder eines Magnetometers und/oder eines GPS-Systems oder eines anderen satellitenbasierten Positioniersystems umfassen. Zumindest manche dieser Sensoren sind typischerweise in Mobiltelefönen oder Tablets vorhanden.

Mithilfe des Beschleunigungssensors kann eine Geschwindigkeitszunahme und/oder eine Geschwindigkeitsabnahme des Eingabeelements in verschiedene Richtungen erkannt werden. Die Richtung, in die die Eingabeeinheit beschleunigt wird, kann beispielsweise durch den Beschleunigungssensor erfasst werden, indem der Beschleunigungssensor feststellt, von wo die Schwerkraft auf das Eingabeelement wirkt. Eine Messung der Beschleunigung erfolgt hierbei in der Regel in drei senkrecht zueinander stehenden Raumrichtungen.

In einer Weiterbildung ist der Beschleunigungssensor ausgestaltet zum Erfassen des Ablegens der Eingabeeinheit. Beim Ablegen der Eingabeeinheit, zum Beispiel auf den berührungsempfindlichen Bildschirm, erhält die Eingabeeinheit typischerweise eine charakteristische Beschleunigung. Durch Detektion dieser charakteristischen Beschleunigung kann daher erkannt werden, ob die Eingabeeinheit abgelegt wurde.

Der Beschleunigungssensor kann außerdem ausgestaltet sein zum Erfassen eines Abhebens des Eingabeelements, zum Beispiel von dem berührungsempfindlichen Bildschirm. Auch beim Abheben des Eingabeelements bekommt das Eingabeelement eine charakteristische Beschleunigung, die durch den Beschleunigungssensor detektierbar ist.

Außerdem kann der Beschleunigungssensor ausgestaltet sein zum Erfassen einer Beschleunigung des Eingabeelements auf dem berührungsempfindlichen Bildschirm. Wenn das Eingabeelement nach dem Ablegen auf den berührungsempfindlichen Bildschirm auf dem berührungsempfindlichen Bildschirm translatorisch oder rotatorisch bewegt wird, ist dies somit durch den Beschleunigungssensor detektierbar.

Eine Genauigkeit des Beschleunigungssensor kann mindestens ±2,5% von 8 g, 4 g oder 2 g oder kleiner, also ±0,2 g, ±0,1 g oder ±0,05 g oder kleiner, betragen, wobei g die ortsabhängige Erdbeschleunigung ist und z.B. ca. 9,81m/s² beträgt.

Durch eine zeitliche Auflösung der Beschleunigung kann wie oben beschrieben festgestellt werden, wann und ob die Eingabeeinheit auf den berührungsempfindlichen Bildschirm aufgelegt wurde. Dies ist bei einem quasi gleichzeitigen Aufsetzen von verschiedenen Eingabeeinheiten von Vorteil, da so eindeutig festgestellt werden kann, welches Eingabeelement wann und wo aufgesetzt wurde. Die Möglichkeit mehrerer Eingabeeinheiten wird später noch ausführlich erläutert. Hierzu kann der Beschleunigungssensor ausgebildet sein zum Erfassen einer Beschleunigung mit einer zeitlichen Genauigkeit von mindestens 100 Millisekunden, vorzugsweise mindestens 50 Millisekunden, besonders bevorzugt mindestens 20 Millisekunden, insbesondere mindestens 10 Millisekunden. Eine Datenübertragungsrate des Beschleunigungssensors kann zwischen 1,6 Hz und 800 Hz betragen, d.h. Werte können alle 641 ms bzw. alle 1,25 ms übertragen werden.

In ähnlicher Weise kann der berührungsempfindliche Bildschirm für eine Detektion einer Berührung eine zeitliche Auflösung von mindestens 100 Millisekunden, vorzugsweise mindestens 50 Millisekunden, besonders bevorzugt mindestens 20 Millisekunden, insbesondere mindestens 10 Millisekunden haben. Das bedeutet, dass beispielsweise die 172 x 105 Messwerte der Pixel des oben erwähnten möglichen 55 Zoll Bildschirms oder eine ähnlich große Zahl Sensordaten mit einer solchen Rate erfasst werden. Diese werden typischerweise in einem ersten Schritt digitalisiert. Die Digitalisierung kann in der Steuer- und Verarbeitungseinheit bzw. in einem Touchcontroller der Steuer- und Verarbeitungseinheit erfolgen und kann auch einen Schritt zur Interpolation der Daten umfassen. Die Digitalisierung kann beispielsweise einmal alle 50 ms, alle 10 ms oder öfter, beispielsweise jede Millisekunde oder alle 0.1 ms vorgenommen werden. Die digitalisierten Daten oder die analogen Sensordaten können dann an die Steuer- und Verarbeitungseinheit übertragen werden, typsicherweise über eine Kabelverbindung, wie USB, zum Beispiel USB 1.1 oder, vorzugsweise, USB 2.0 oder höher.

Vorzugsweise sind Zeitmessungen in der Eingabeeinheit und im berührungsempfindlichen Bildschirm synchronisiert, damit zeitliche Abläufe miteinander verglichen werden können. Die Steuer- und Verarbeitungseinheit kann zum Beispiel den zeitlichen Verlauf der ersten und zweiten Sensordaten jeweils mit einer Genauigkeit von 100 ms, bevorzugt 50 ms, besonders bevorzugt 20 ms, insbesondere mindestens 10 ms erfassen.

In einer Ausführungsform umfasst die Eingabeeinheit ein Gyroskop zum Erfassen einer Drehbewegung des Eingabeelements. Das Gyroskop misst z.B. eine rotatorische Geschwindigkeit und somit Drehbewegung der Eingabeeinheit. Für eine Bestimmung der Orientierung nutzt das Gyroskop typischerweise eine Corioliskraft und das sogenannte Stimmgabel-Prinzip. Im Gyroskop, das typischerweise eine Größe von 4 x 4 mm aufweist, werden z.B. Metallelemente durch Strom zum Schwingen gebracht. Wird die Eingabeeinheit bewegt, so verändert sich die Schwingung der Metallelemente, und darum herum angeordnete Kondensatoren registrieren eine Veränderung, die dann als Drehbewegung detektiert wird. Andere dem Stand der Technik entsprechende Sensoren für Drehgeschwindigkeiten sind denkbar. Das Gyroskop kann vorzugsweise Drehgeschwindigkeiten bis zu 2000°/s mit einer Genauigkeit von 0,0625°/s und mit z.B. einer Datenrate von 12,5 Hz bis 800 Hz erfassen.

In einer Weiterbildung umfasst die Eingabeeinheit einen Feldsensor zum Erfassen einer elektrischen Feldstärke des berührungsempfindlichen Bildschirms und/oder zum Messen einer Änderung der elektrischen Feldstärke des berührungsempfindlichen Bildschirms. Mittels des Feldsensors kann also auch detektiert werden, ob die Eingabeeinheit auf dem berührungsempfindlichen Bildschirm aufliegt. Der Feldsensor kann die Feldstärke z. B. mit einer Messfrequenz von mindestens 50 kHz, mindestens 100 kHz, mindestens 200 kHz oder mindestens 300 kHz erfassen. Beispielsweise erfasst der Feldsensor die Feldstärke mit einer Frequenz von 400 kHz.

In einer weiteren Ausführungsform umfasst die Eingabeeinheit einen Farbsensor oder mehrere Farbsensoren zum Erfassen einer durch den berührungsempfindlichen Bildschirm angezeigten Farbe in zumindest einem Bereich des berührungsempfindlichen Bildschirms. Insbesondere ist der Farbsensor als Lichtsensor ausgestaltet, der zumindest einen Teil des sichtbaren Spektrums (also etwa von 380 nm bis etwa 780 nm) erfasst. Der Farbsensor kann auch als Kamera ausgebildet sein. Durch eine Detektion einer bestimmten Farbe auf dem berührungsempfindlichen Bildschirm und Vergleich dieser Farbe mit einem Farbverlauf oder Farbmuster, der oder das durch den berührungsempfindlichen Bildschirm wiedergegeben wird, kann beispielsweise eine Positionsveränderung der Eingabeeinheit detektiert werden. Dazu zeigt der berührungsempfindliche Bildschirm ein Farbmuster oder einen Farbverlauf an. Die Steuer- und Verarbeitungseinheit kann dann mithilfe der durch den Farbsensor erkannten Farbe ermitteln, wo sich die Eingabeeinheit auf dem Bildschirm befindet.

In einer weiteren Ausführungsform umfasst die Eingabeeinheit einen Näherungssensor zum Erfassen eines Abstands zwischen dem berührungsempfindlichen Bildschirm und dem Eingabeelement. Je nach Ausführung kann eine Reichweite des Näherungssensors bis zu 10 cm betragen. Üblicherweise nutzt der Näherungssensor einen Infrarotstrahl, um zu überprüfen, ob sich der Bildschirm der Eingabeeinheit nähert. Wird beispielsweise die Eingabeeinheit auf den berührungsempfindlichen Bildschirm gestellt, registriert der Näherungssensor eine Reflexion der Infrarotstrahlen durch den Bildschirm, wodurch detektiert wird, dass die Eingabeeinheit sich auf dem berührungsempfindlichen Bildschirm befindet.

Die hier vorgeschlagene Steuer- und Verarbeitungseinheit kann dazu eingerichtet sein, Rotationen und/oder Translationen der Eingabeeinheit auf dem Bildschirm zu verfolgen, wenn die Eingabeeinheit auf dem Bildschirm abgelegt wurde. Dies kann einerseits ähnlich wie bei der oben beschriebenen Positionsbestimmung durch Auswerten der ersten Sensordaten geschehen. Es kann aber alternativ oder zusätzlich auch durch Auswerten der zweiten Sensordaten der vorstehend beschriebenen Sensoren geschehen. Insbesondere durch Vergleichen der ersten und der zweiten Sensordaten kann die eingangs erwähnte Redundanz bzw. Ergänzung erreicht werden.

So kann beispielsweise vorgesehen sein, dass, wenn eine Bestimmung einer Orientierung der Eingabeeinheit aus den Symmetrien der Kapazitätsmuster nicht oder nur unter hohem Aufwand möglich ist, zum Beispiel weil Bilder niedriger Rotationssymmetrie aufgrund des Kontrasts nicht zur Verfügung stehen, die zweiten Sensordaten herangezogen werden, um die Symmetrie zu brechen.

Beispielsweise kann es sein, dass ein Mobiltelefon auf dem Niveau eines sehr niedrigen Schwellenwertes ein im Wesentlichen rechteckiges Kapazitätsmuster besitzt. Die Steuer- und Verarbeitungseinheit kann also bei schwachem Kontrast, wenn keine Strukturen, wie beispielsweise Batterie oder Kamera erkennbar sind, nicht zwischen oben und unten unterscheiden. Bei einer Drehung der Eingabeeinheit um 180° würde sich das gleiche Signal in dem berührungsempfindlichen Bildschirm ergeben. Wird das Eingabeelement nun bewegt, so kann mittels der gemessenen, richtungsabhängigen Beschleunigung die Rotation bzw. der Drehwinkel (Orientierung) der Eingabeeinheit eindeutig aufgelöst werden. Gleichzeitig kann durch die Redundanz ein Sicherheitsmechanismus bereitgestellt werden. Stellt die Steuer- und Verarbeitungseinheit fest, dass die ersten Sensordaten und die zweiten Sensordaten widersprüchlich sind und sich nicht einer Bewegung der Eingabeeinheit zuordnen lassen, kann der Kopplungsmodus getrennt werden.

Die Steuer- und Verarbeitungseinheit ist typischerweise eingerichtet zum drahtlosen Datenaustauschs zwischen dem Speicher der Steuer- und Verarbeitungseinheit und einem Speicher der Eingabeeinheit, wenn die Eingabeeinheit auf dem Bildschirm abgelegt wurde. Die Steuer- und Verarbeitungseinheit und die Eingabeeinheit verfügen dann jeweils über eine drahtlose Kommunikationseinheit. Die drahtlosen Kommunikationseinheiten können einen Teil eines Netzwerks bilden. Mögliche drahtlose Verbindungen schließen beispielsweise WLAN oder WPAN, insbesondere Bluetooth, oder andere Nahfeldverbindungen ein. Die Kommunikationseinheiten übermitteln die Sensordaten und/oder Signale typischerweise in Abständen von 10 ms bis 20 ms

Die Verbindung der Steuer- und Verarbeitungseinheit mit dem berührungsempfindlichen Bildschirm kann ebenfalls drahtlos sein; es kann aber auch eine Verbindung mittels eines Kabels vorgesehen sein, beispielsweise eines USB-Kabels.

Eine wie oben beschriebene Verbindung zwischen der Steuer- und Verarbeitungseinheit und der Eingabeeinheit besteht typischerweise, damit die Sensordaten des Sensors der Eingabeeinheit an die Steuer- und Verarbeitungseinheit übermittelt werden können. Wenn die oben beschriebenen Kriterien für den Kopplungsmodus erfüllt sind, wird der Kopplungsmodus hergestellt.

Die Steuer- und Verarbeitungseinheit kann dazu eingerichtet sein, den berührungsempfindlichen Bildschirm oder den berührungsempfindlichen Bildschirm der Eingabeeinheit basierend auf den ersten und/oder zweiten Sensordaten anzusteuern oder Eingabesignale des berührungsempfindlichen Bildschirms und/oder des berührungsempfindlichen Bildschirms der Eingabeeinheit zu empfangen, insbesondere dann, wenn die Eingabeeinheit auf dem Bildschirm abgelegt wurde.

Der Kopplungsmodus kann zum Beispiel weiterhin umfassen, dass die Steuer- und Verarbeitungseinheit auf Basis der ersten und/oder zweiten Sensordaten eine Anzeige des berührungsempfindlichen Bildschirms und/oder des Eingabeelements ansteuert. Weiterhin kann im Kopplungsmodus vorgesehen sein, basierend auf den ersten und/oder zweiten Sensordaten einen Datenaustausch zu initiieren. Derartige Aktionen können zum Beispiel durch eine mittels Abgleich der ersten Sensordaten und zweiten Sensordaten detektierten Positionsänderung oder Drehwinkeländerung der Eingabeeinheit ausgelöst werden.

Die Steuer- und Verarbeitungseinheit kann wie erwähnt dazu eingerichtet sein, den berührungsempfindlichen Bildschirm der Eingabeeinheit anzusteuern oder Eingabesignale des berührungs-empfindlichen Bildschirms der Eingabeeinheit zu empfangen. Die Steuer- und Verarbeitungseinheit kann dann in typischen Ausführungen auch den berührungsempfindlichen Bildschirm basierend auf den Eingabesignalen des berührungsempfindlichen Bildschirms der Eingabeeinheit ansteuern, insbesondere im Kopplungsmodus.

Die Steuer- und Verarbeitungseinheit kann den Kopplungsmodus beenden, wenn die ersten Sensordaten und/oder die zweiten Sensordaten einem Abheben der Eingabeeinheit zuordenbar sind. Es ist aber auch möglich, dass der Kopplungsmodus nach Abheben fortbesteht. Wenn der Kopplungsmodus nach dem Abheben fortbesteht, gibt es typischerweise eine Veränderung in einem Status des Kopplungsmodus. Eine Interaktion zwischen der Eingabeeinheit und der Steuer- und Verarbeitungseinheit, wie bspw. Datenaustausch oder Ansteuern der jeweiligen berührungsempfindlichen Bildschirme, kann dann beispielsweise weiterhin ermöglicht werden, solche Aktionen, die mit einer Verfolgung der aufgelegten Eingabeeinheit verbunden sind, werden dagegen nicht mehr ausgeführt. Der Kopplungsmodus kann dann zum Beispiel durch Ausführen einer weiteren Aktion beendet werden.

Wie erwähnt, besteht die Möglichkeit, dass die Steuer- und Verarbeitungseinheit mehrere Eingabeeinheiten gleichzeitig erfasst bzw. mit mehreren Eingabeeinheiten gleichzeitig gekoppelt ist. Mögliche weitere Eingabeeinheiten weisen dabei typischerweise die gleichen oder ähnliche Merkmale wie die oben beschriebene Eingabeeinheit, die als erste Eingabeeinheit bezeichnet werden kann, auf und wechselwirken auf die gleiche Weise mit der Steuer- und Verarbeitungseinheit.

Das kann bewirkt werden, indem die Steuer- und Verarbeitungseinheit eingerichtet ist, weitere zweite Sensordaten mindestens einer weiteren Eingabeeinheit, die von der mindestens einen weiteren Eingabeeinheit an die Steuer- und Verarbeitungseinheit übermittelt werden zu empfangen. Die zweiten Sensordaten umfassen dann Daten eines Sensors der mindestens einen weiteren Eingabeeinheit, der dazu ausgebildet ist, ein Ablegen der mindestens einen weiteren Eingabeeinheit zu detektieren.

Wie im Fall der ersten Eingabeeinheit, wird anhand eines zeitlichen Verlaufs der ersten Sensordaten und der weiteren zweiten Sensordaten überprüft, ob zeitgleich mit dem Auflegen eines weiteren Objekts mit einer leitenden Struktur auf den Bildschirm ein Ablegen der mindestens einen weiteren Eingabeeinheit detektiert wurde.

So kann festgestellt werden, ob es sich bei dem weiteren Objekt um die mindestens eine weitere Eingabeeinheit handelt und also überprüft werden, ob die mindestens eine weitere Eingabeeinheit auf dem Bildschirm abgelegt wurde.

Für die leitende Struktur des weiteren Objekts wird dann auch ein Kapazitätsmuster erstellt und gespeichert.

Wenn die Kontaktierung und das Ablegen gleichzeitig detektiert wurden, wird ein Kopplungsmodus für die mindestens eine weitere Eingabeeinheit durch Senden von Daten an die mindestens eine weitere Eingabeeinheit oder durch Senden von Daten an und Empfangen von Daten von der mindestens einen weiteren Eingabeeinheit hergestellt.

Wenn sich nun beispielsweise zwei oder mehr als zwei Eingabeeinheiten auf dem berührungsempfindlichen Bildschirm befinden, kann die Steuer- und Verarbeitungseinheit typischerweise aufgrund der Zeitverläufe beim Ab- bzw. Auflegen der jeweiligen Eingabeeinheit zwischen den Eingabeeinheiten unterscheiden. Das kann insbesondere durch die oben beschriebene genaue Erfassung der zeitlichen Abläufe sichergestellt werden. In der Praxis werden mehrere Eingabeeinheiten typischerweise nicht derart zeitgleich aufgelegt, dass eine Zuordnung auf Basis der ersten und zweiten Sensordaten nicht möglich ist, bzw. die Zeitintervalle können so gewählt werden, dass ein Szenario, in dem eine Unterscheidung nicht möglich ist, unwahrscheinlich ist.

Besteht allerdings, gewünscht oder ungewünscht, eine Ambiguität zwischen zwei oder mehr aufgelegten Eingabeeinheiten, so kann beispielsweise eines oder mehrere davon bewegt oder gedreht werden. Dann kann wiederum durch Vergleich der ersten Sensordaten und der zweiten Sensordaten aller aufliegenden Eingabeeinheiten festgestellt werden, welches der Eingabeelemente gerade bewegt wurde. Die vom Beschleunigungssensor gemessenen Signale können dann zur Identifikation des Eingabeelements herangezogen werden. Ebenso kann bei mehreren aufliegenden Eingabeeinheiten auch das Kapazitätsmuster herangezogen, beispielsweise wenn eine oder mehrere der Eingabeeinheiten vorbekannt sind und ihr Kapazitätsmuster bereits während einer früheren Kopplung gespeichert wurde. Das ist zumindest möglich, wenn es sich bei den aufliegenden Eingabeeinheiten um nicht baugleiche Eingabeeinheiten, beispielsweise unterschiedliche Mobiltelefonmodelle handelt.

Liegen mehrere Eingabeeinheiten auf dem berührungsempfindlichen Bildschirm auf und sind jeweils identifiziert, so wird typischerweise für jede Eingabeeinheit der Kopplungsmodus hergestellt. Die gekoppelten Eingabeeinheiten können dann unabhängig voneinander mit der Steuer- und Verarbeitungseinheit interagieren. Es kann aber auch vorgesehen sein, dass die mehreren oder einige der mehreren aufliegenden bzw. gekoppelten Eingabeeinheiten miteinander gekoppelt werden, beispielsweise indirekt über die Steuer- und Verarbeitungseinheit, so dass beispielsweise ein Datenaustausch zwischen zwei gekoppelten Mobiltelefonen über die Steuer- und Verarbeitungseinheit möglich ist.

Ein System, welches hier vorgeschlagen wird, umfasst einen berührungsempfindlichen Bildschirm, insbesondere den zuvor beschriebenen berührungsempfindlichen Bildschirm, eine Steuer- und Verarbeitungseinheit, insbesondere die zuvor beschriebene Steuer- und Verarbeitungseinheit, und eine Eingabeeinheit, insbesondere die zuvor beschriebene Eingabeeinheit.

In einem solchen System umfasst der berührungsempfindliche Bildschirm kapazitive Sensoren zur Erhebung erster Sensordaten. Die Eingabeeinheit umfasst eine leitende Struktur, die bei einem Auflegen der Eingabeeinheit auf einen berührungsempfindlichen Bildschirm lokale Kapazitätsänderungen verursacht, die durch die kapazitiven Sensoren des berührungsempfindlichen Bildschirms detektierbar sind.

Die Eingabeeinheit umfasst weiterhin einen Sensor zur Erhebung zweiter Sensordaten, wobei der Sensor dazu ausgebildet ist, ein Ablegen der Eingabeeinheit zu detektieren.

Die Eingabeeinheit ist dazu eingerichtet, die zweiten Sensordaten an die Steuer- und Verarbeitungseinheit zu übermitteln, während die Steuer- und Verarbeitungseinheit dazu eingerichtet ist, anhand eines zeitlichen Verlaufs der ersten und zweiten Sensordaten zu überprüfen, ob zeitgleich mit einer Kontaktierung des Bildschirms durch ein Objekt mit einer leitenden Struktur ein Ablegen der Eingabeeinheit detektiert wurde. So kann die Steuer- und Verarbeitungseinheit feststellen, ob die Eingabeeinheit auf dem Bildschirm abgelegt wurde. Die Steuer- und Verarbeitungseinheit kann ein Kapazitätsmuster für die leitende Struktur der Eingabeeinheit erstellen und speichern, wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält.

Sind das Ablegen und das Auflegen gleichzeitig erfolgt, stellen die Steuer- und Verarbeitungseinheit und die Eingabeeinheit durch Austausch von Daten einen Kopplungsmodus her. Durch ein solches System wird ebenfalls die eingangs formulierte Aufgabe gelöst.

Es sei angemerkt, dass das System auch mehrere berührungsempfindliche Bildschirme umfassen kann, zum Beispiel zwei berührungsempfindliche Bildschirme oder zehn berührungsempfindliche Bildschirme. Der eine oder die mehreren berührungsempfindlichen Bildschirme können jeweils mit Kabel oder, z.B. wenn sie sich weiter entfernt von der Steuer- und Verarbeitungseinheit befinden oder Kabel unerwünscht sind, auch per Drahtlosverbindung, wie zum Beispiel WLAN, Bluetooth oder ein Mobilfunknetz mit der Steuer- und Verarbeitungseinheit verbunden sein. Die Steuer- und Verarbeitungseinheit ist dann typischerweise dazu eingerichtet, mit den zusätzlichen Bildschirmen ebenso wie mit dem ersten berührungsempfindlichen Bildschirm zu interagieren. In solchen Szenarien ist es zusätzlich möglich, dass auch eine Wechselwirkung zwischen den mehreren Bildschirmen vorgesehen ist, also eine Aktion die einen ersten der mehreren berührungsempfindlichen Bildschirme betrifft eine weitere Aktion auslöst, die einen anderen der mehreren berührungsempfindlichen Bildschirme betrifft.

Ein Verfahren zur Verwendung eines berührungsempfindlichen Bildschirms im Sinne dieser Anmeldung, bzw. eines wie oben beschriebenen Systems, umfasst zumindest die folgenden Schritte:
- Detektieren von Kapazitätsänderungen durch kapazitive Sensoren eines berührungsempfindlichen Bildschirms, wobei die Kapazitätsänderungen durch eine leitende Struktur eines den Bildschirm kontaktierenden Objekts verursacht werden, und Speichern der mit den kapazitiven Sensoren erfassten Kapazitätsänderungen als erste Sensordaten,
- Detektieren eines Ablegens einer Eingabeeinheit mittels Sensoren der Eingabeeinheit und Speichern von mittels der Sensoren der Eingabeeinheit erfassten Größen als zweite Sensordaten,
- Überprüfen anhand eines zeitlichen Verlaufs der ersten und zweiten Sensordaten, ob zeitgleich mit einer Kontaktierung des Bildschirms durch das Objekt ein Ablegen der Eingabeeinheit detektiert wurde, um festzustellen, ob die Eingabeeinheit auf dem Bildschirm abgelegt wurde
- Erstellen und Speichern eines Kapazitätsmusters für die leitende Struktur der Eingabeeinheit, wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält,
- Herstellen eines Kopplungsmodus zwischen einer Steuer- und Verarbeitungseinheit des berührungsempfindlichen Bildschirms und der Eingabeeinheit durch einen Austausch von Daten zwischen der Steuer- und Verarbeitungseinheit und der Eingabeeinheit, wenn die Kontaktierung und das Ablegen gleichzeitig detektiert wurden.

Durch ein solches Verfahren wird ebenfalls die eingangs formulierte Aufgabe gelöst. Mit dem Verfahren ist es möglich, eine Identität einer auf einem berührungsempfindlichen Bildschirm aufgelegten bzw. abgelegten Eingabeeinheit zu überprüfen, ihren Ort und ihre Orientierung auf dem Bildschirm festzustellen und eine Interaktion sowie einen sicheren Datenaustausch zwischen der Eingabeeinheit und dem berührungsempfindlichen Bildschirm zu ermöglichen, sowie unterschiedliche Eingabemöglichkeiten für den berührungsempfindlichen Bildschirm, insbesondere durch Eingaben über Bewegungen der Eingabeeinheit auf dem berührungsempfindlichen Bildschirm, bereitzustellen.

Die Erfindung bezieht sich weiterhin auch auf den folgenden Aspekt:
1. Eingabeeinheit für einen berührungsempfindlichen Bildschirm, einen Speicher, eine Kommunikationseinheit, einen Sensor und eine leitende Struktur umfassend,
   wobei die leitende Struktur dazu ausgebildet ist, bei einem Auflegen der Eingabeeinheit auf einen berührungsempfindlichen Bildschirm Kapazitätsänderungen zu verursachen, die durch kapazitive Sensoren des berührungsempfindlichen Bildschirms als erste Sensordaten detektierbar sind,
   - Senden von zweiten Sensordaten, an eine Steuer- und Verarbeitungseinheit des berührungsempfindlichen Bildschirms, wobei die zweiten Sensordaten Daten des Sensors der Eingabeeinheit umfassen, der dazu ausgebildet ist, ein Ablegen der Eingabeeinheit zu detektieren,
   - Herstellen eines Kopplungsmodus mit einer Steuer- und Verarbeitungseinheit des berührungsempfindlichen Bildschirms durch Empfangen von Daten von und/oder Senden von Daten an die Steuer- und Verarbeitungseinheit des berührungsempfindlichen Bildschirms, wenn durch die ersten Sensordaten und die zweiten Sensordaten angezeigt wird, dass das Auflegen und das Ablegen gleichzeitig stattgefunden haben, und ein Kapazitätsmuster für die leitende Struktur der Eingabeeinheit erstellt und gespeichert wurde, wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält.

Es sei betont, dass Merkmale, die z.B. nur in Bezug auf die Steuer- und Verarbeitungseinheit oder die Eingabeeinheit oder das System genannt wurden, auch für das genannte Verfahren beansprucht werden können und anders herum.

Außerdem sei betont, dass Merkmale, z.B. bezüglich einer Auswertung von Daten und/oder Signalen der oben genannten Sensoren, die nur in Bezug auf die Steuer- und Verarbeitungseinheit oder das System genannt wurden, auch für die Eingabeeinheit beansprucht werden können und anders herum.

Die Erfindung wird anhand der beigefügten Figuren erläutert. Es zeigen
- Fig. 1a-c: verschiedene Ansichten der Eingabeeinheit,
- Fig. 2: ein System, einen berührungsempfindlichen Bildschirm, eine Steuer- und Verarbeitungseinheit und eine Eingabeeinheit umfassend,
- Fig. 3: das System aus Figur 2, zusätzlich eine weitere Eingabeeinheit umfassend,
- Fig. 4a-b: ortsaufgelöst dargestellte erste Sensorsignale für die aufgelegte Eingabeeinheit als Schwarz-Weißbilder mit unterschiedlichen Schwellenwerten, und
- Fig. 5: eine Darstellung eines Verfahrens zur Verwendung des berührungsempfindlichen Bildschirms.

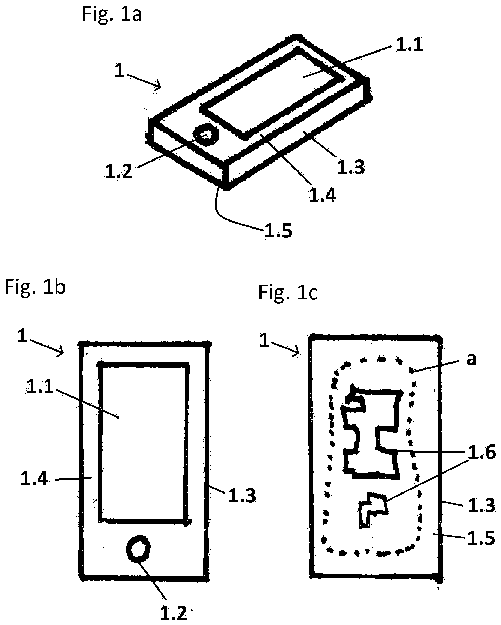

Die Figuren 1a-c zeigen eine als Mobiltelefon ausgestaltete Eingabeeinheit 1 in drei unterschiedlichen Ansichten. Figur 1a zeigt eine Schrägansicht, Figur 1b eine Vorderansicht und Figur 1c eine Rückansicht. Die Eingabeeinheit weist ein Gehäuse 1.3 auf. In der Schrägansicht, Figur 1a, und in der Vorderansicht, Figur 1b, ist die Vorderseite 1.4 mit einem berührungsempfindlichen Bildschirm 1.1 und einem Knopf 1.2 zu sehen. Über den berührungsempfindlichen Bildschirm 1.1 und den Knopf 1.2 können durch einen Benutzer Eingaben getätigt werden, und über den berührungsempfindlichen Bildschirm kann außerdem eine visuelle Ausgabe erfolgen. Ferner ist es auch möglich, dass die Eingabeeinheit mit weiteren Systemen zur Ausgabe von Signalen ausgestattet ist, bspw. mit Lautsprechern für eine akustische Ausgabe oder ein Vibrationssystem. Die Eingabeeinheit verfügt außerdem über einen Speicher, in dem Daten gespeichert sind, und einen oder mehrere Beschleunigungssensoren zur Erhebung zweiter Sensordaten. Mittels der Beschleunigungssensoren können Beschleunigungen der Eingabeeinheit detektiert werden, das heißt, es kann zum Beispiel eine Ausrichtung der Eingabeeinheit bezüglich des Schwerefelds der Erde sowie ein Kippen oder Rotieren um unterschiedliche Achsen und ein translatorisches Bewegen oder Verschieben detektiert werden. Derartige Aktionen lassen sich also den zweiten Sensordaten entnehmen. Damit kann insbesondere festgestellt werden, ob die Eingabeeinheit abgelegt wurde, auf welche Seite sie gelegt wurde und ob sie auf eine horizontale Fläche gelegt wurde. Ein Ablegen oder ein Anheben der Eingabeeinheit durch einen Benutzer geht mit einer charakteristischen Beschleunigung einher. So ist aus einem zeitlichen Verlauf der zweiten Sensordaten auch ein Verlauf einzelner Ablegeprozesse oder Anhebeprozesse rekonstruierbar. Die zweiten Sensordaten werden zumindest teilweise und zumindest vorübergehend in dem Speicher der Eingabeeinheit 1 gespeichert und mit einem Zeitstempel versehen. Die Eingabeeinheit umfasst neben den Beschleunigungssensoren auch eine Kamera, die als Farbsensor verwendet werden kann. Die Eingabeeinheit kann auch einen Abstandssensor, etwa einen Infrarotabstandssensor umfassen. Weiterhin umfasst die Eingabeeinheit 1 eine Bluethooth-Einheit zum Senden und Empfangen von Daten über Bluetooth, sowie eine WLAN-Einheit zum Senden und Empfangen von Daten über WLAN. Derartige Sensoren und Sende- und Empfangseinheiten sind typischerweise in Mobiltelefonen verbaut.

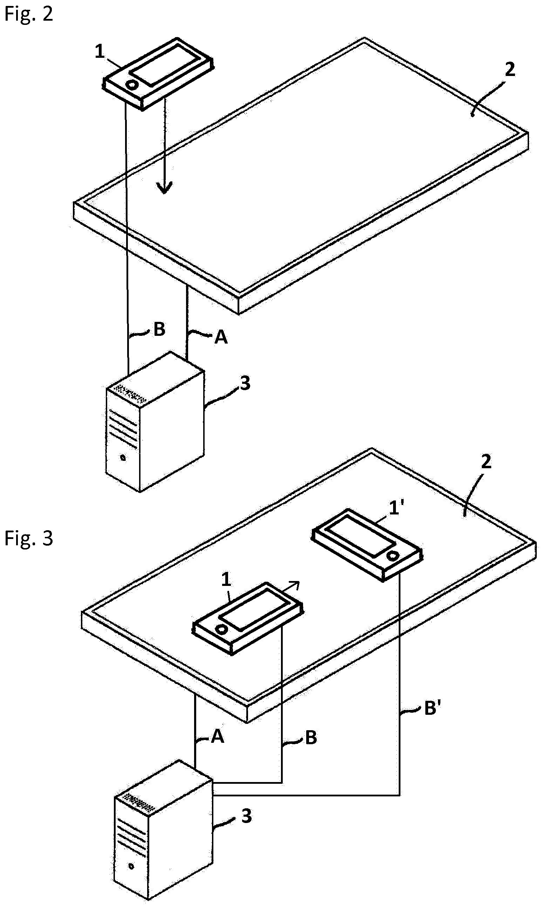

Figur 1c zeigt eine Rückseite 1.5 der Eingabeeinheit 1, in die zu Anschauungszwecken ein Ausschnitt a eingebracht ist, durch den ein Inneres der Eingabeeinheit 1 freigelegt wird. In dem Inneren ist eine elektrisch leitende Struktur 1.6 zu erkennen, die z.B. Teile eines Akkus, metallische Gehäuseteile und elektrische Leitungen und weitere metallische Komponenten auf Platinen der Eingabeeinheit umfasst. Die leitende Struktur 1.6 bildet eine Anordnung zumindest teilweise miteinander leitend verbundener leitender Komponenten. Diese Struktur 1.6 ist mittels berührungsempfindlicher kapazitiver Sensoren eines Touchscreens detektierbar, wie im Zusammenhang mit den Figuren 2 bis 4 noch weiter ausgeführt wird.

Figur 2 zeigt ein System, welches einen als Tisch ausgebildeten berührungsempfindlichen Bildschirm 2, eine Steuer- und Verarbeitungseinheit 3 und die Eingabeeinheit 1 aus Figur 1 umfasst. Der berührungsempfindliche Bildschirm steht mit der Steuer- und Verarbeitungseinheit 2 in einer Kommunikationsverbindung A über ein Kabel, in diesem Fall über USB 3.0, und die Eingabeeinheit 1 steht mit der Steuer- und Verarbeitungseinheit 2 in einer drahtlosen Kommunikationsverbindung B über Bluetooth. Die Eingabeeinheit 1 wird, wie durch einen Pfeil angedeutet, auf den berührungsempfindlichen Bildschirm 2 abgelegt bzw. aufgelegt.

Das Auflegen der Eingabeeinheit 1 auf den berührungsempfindlichen Bildschirm 2 wird aufgrund der leitenden Struktur 1.6 der Eingabeeinheit von kapazitiven Sensoren des berührungsempfindlichen Bildschirms 2 detektiert. Entsprechende erste Sensordaten, die mittels kapazitiver Sensoren des berührungsempfindlichen Bildschirms generiert werden, werden als analoges Signal an einen Touchcontroller weitergegeben, der baulich in eine Platte des als Tisch ausgebildeten berührungsempfindlichen Bildschirms integriert sein kann, dort in einem zeitlichen Abstand von 0.1 ms digitalisiert und interpoliert und dann zusammen mit einem Zeitstempel über USB 3.0 an die Steuer- und Verarbeitungseinheit 3 weitergeben, wo die ersten Sensordaten empfangen, gespeichert und weiterverarbeitet werden. Der Touchcontroller kann dabei auch Teil der Steuer- und Verarbeitungseinheit 3 sein und die Steuer- und Verarbeitungseinheit 3 oder Teile davon können ebenfalls in die Platte des berührungsempfindlichen Bildschirms 2 oder in ein Gehäuse des berührungsempfindlichen Bildschirms integriert sein.

Das Auflegen bzw. Ablegen der Eingabeeinheit 1 entlang dem eingezeichneten Pfeil wird außer von den kapazitiven Sensoren des berührungsempfindlichen Bildschirms auch von den Beschleunigungssensoren der Eingabeeinheit 1 detektiert. Mit Hilfe der Beschleunigungssensoren werden entsprechende zweite Sensordaten erhoben und zusammen mit einem Zeitstempel an die Steuer- und Verarbeitungseinheit übermittelt, wo sie empfangen, gespeichert und weiterverarbeitet werden. Alternativ oder zusätzlich könnte ein Ablegen auch von dem möglichen Abstandssensor oder der Kamera der Eingabeeinheit 1 detektiert werden.

Die Steuer- und Verarbeitungseinheit 3 überprüft anhand der Zeitstempel einen zeitlichen Verlauf der ersten und zweiten Sensordaten und stellt damit fest, ob das von den kapazitiven Sensoren erfasste Auflegen gleichzeitig mit dem durch die Beschleunigungssensoren detektierten Ablegen erfolgt ist.

Durch diesen Zeitabgleich kann festgestellt werden, ob tatsächlich die Eingabeeinheit auf dem Bildschirm abgelegt wurde. Im vorliegenden Fall werden die ersten und zweiten Sensordaten im Abstand von 10 ms erhoben. So kann mit hinreichender Sicherheit ausgeschlossen werden, dass nicht ein anderes Objekt auf den berührungsempfindlichen Bildschirm 2 gelegt wurde, während die Eingabeeinheit an einen anderen Ort gelegt wurde.

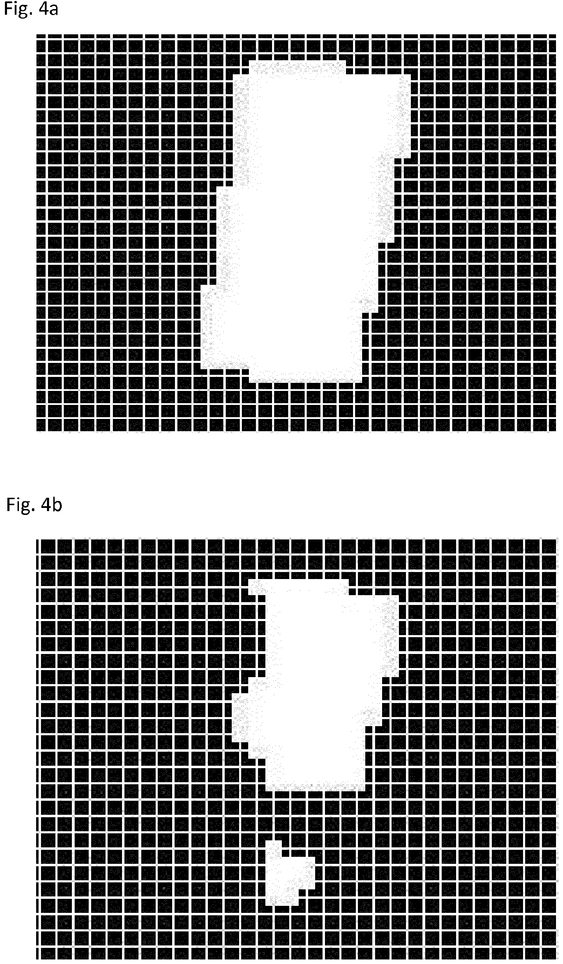

Nachdem die Eingabeeinheit 1 auf den berührungsempfindlichen Bildschirm 2 abgelegt wurde, erstellt die Steuer- und Verarbeitungseinheit 3 aus den ersten Sensordaten ein Kapazitätsmusters für die leitende Struktur 1.6 der Eingabeeinheit und speichert dieses, wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält. Diese Kapazitätsmuster werden im Zusammenhang mit Figur 4 noch näher erläutert.

Wenn von der Steuer- und Verarbeitungseinheit 3 die oben beschriebene Gleichzeitigkeit des Ablegens und Auflegens verifiziert und damit sichergestellt wurde, dass die Eingabeeinheit 1 auf dem berührungsempfindlichen Bildschirm 2 aufliegt, stellt die Steuer- und Verarbeitungseinheit einen Kopplungsmodus für die Eingabeeinheit durch Senden von Daten an und/oder Empfangen von Daten von der Eingabeeinheit her.

Beim Herstellen des Kopplungsmodus kann auch berücksichtigt werden, ob die Eingabeeinheit auf die Rückseite gelegt wurde, so dass der berührungsempfindliche Bildschirm 1.1 der Eingabeeinheit 1 zugängig und sichtbar ist und eine Kopplung ansonsten nicht durchgeführt werden. Dies wird vorzugsweise aus den zweiten Sensordaten des Beschleunigungssensors ermittelt, kann aber in manchen Fällen auch aus den ersten Sensordaten ermittelt werden, wie später dargestellt wird.

Nachdem der Kopplungsmodus hergestellt ist, können drahtlos Daten zwischen dem Speicher der Steuer- und Verarbeitungseinheit und dem Speicher der Eingabeeinheit ausgetauscht werden.

Die Steuer- und Verarbeitungseinheit 2 ermittelt dabei im Kopplungsmodus auch Position und Orientierung der Eingabeeinheit 1 auf dem berührungsempfindlichen Bildschirm 3 aus den ersten Sensordaten.

Figur 3 zeigt das System aus Figur 2, bei dem neben der dort gezeigten Eingabeeinheit noch eine zweite Eingabeeinheit 1' auf den berührungsempfindlichen Bildschirm aufgelegt ist. Die zweite Eingabeeinheit 1' weist ähnliche oder gleiche Merkmale auf wie die erste Eingabeeinheit 1. Sie verfügt ebenfalls zumindest über eine leitende Struktur, einen berührungsempfindlichen Bildschirm, einen Knopf, einen Speicher, Beschleunigungssensoren und eine Bluetoothkommunikationseinheit.

Die Steuer- und Verarbeitungseinheit 3 interagiert mit der zweiten Eingabeeinheit 1' im Wesentlichen auf die gleiche Weise, wie mit der ersten Eingabeeinheit 1. Sie empfängt weitere zweite Sensordaten eines Beschleunigungssensors der zweiten Eingabeeinheit 1', mit denen sich ein Ablegen nachvollziehen lässt, und überprüft wieder anhand eines zeitlichen Verlaufs der ersten Sensordaten des berührungsempfindlichen Bildschirms und der zusätzlichen zweiten Sensordaten der zweiten Eingabeeinheit, ob die zweite Eingabeeinheit 1' auf den berührungsempfindlichen Bildschirm 2 gelegt wurde.

Dann erfolgt im Falle einer positiven Prüfung das Erstellen und Speichern eines Kapazitätsmusters für die leitende Struktur der zweiten Eingabeeinheit und das Herstellen eines Kopplungsmodus für die zweite Eingabeeinheit durch Senden von Daten an und/oder Empfangen von Daten von der zweiten Eingabeeinheit 1'. Das Kapazitätsmuster umfasst wieder eine ortsaufgelöste Darstellung mindestens zwei verschieden großer Kapazitätsänderungen oder mindestens drei paarweise verschieden großer Kapazitätswerte oder davon abgeleiteter Größen.

Nachfolgend werden weitere Interaktionen des Systems beschrieben. Dabei sei angemerkt, dass diese Interaktionen sowohl bei einer aufgelegten Eingabeeinheit als auch bei mehr als zwei aufgelegten Eingabeeinheiten analog erfolgen können.

Die Steuer- und Verarbeitungseinheit 3 ist dazu eingerichtet, den berührungsempfindlichen Bildschirm 2 basierend auf den ersten und/oder zweiten Sensordaten anzusteuern. Das heißt, wenn zum Beispiel die Eingabeeinheit 1 entlang dem in der Figur gezeigten Pfeil bewegt wird, wird dies von der Steuer- und Verarbeitungseinheit registriert und es können daraufhin Aktionen ausgeführt werden. Insbesondere wenn der Kopplungsmodus besteht, kann eine Anzeige des berührungsempfindlichen Bildschirms 2 abhängig von diesen Sensordaten verändert werden. Die Steuer- und Verarbeitungseinheit 3 kann beispielsweise einen Bereich des berührungsempfindlichen Bildschirms 2, der eine Umgebung einer aufgelegten Eingabeeinheit 1 darstellt, farbig markieren oder dort Schrift einblenden.

Basierend auf den ersten und zweiten Sensordaten können auch andere Aktionen initiiert werden, zum Beispiel ein Datenaustausch. Beispielsweise kann ein Datenaustausch zwischen dem Speicher der Steuer- und Verarbeitungseinheit und dem Speicher einer Eingabeeinheit 1, 1' initiiert werden, die in einen bestimmten, typischerweise markierten, Bereich des berührungsempfindlichen Bildschirms gelegt oder geschoben wird.

Außerdem kann die Steuer- und Verarbeitungseinheit Eingabesignale des berührungsempfindlichen Bildschirms empfangen, wie auch Eingabesignale des berührungsempfindlichen Bildschirms der Eingabeeinheit, den sie ebenfalls ansteuern kann.

Zusammenfassend lässt sich sagen, dass als Eingabemöglichkeiten für die Steuer- und Verarbeitungseinheit zum Beispiel Eingaben auf dem berührungsempfindlichen Bildschirm selbst, zum Beispiel durch einen Finger, sowie Eingaben in die Eingabeeinheit oder die Eingabeeinheiten, durch deren berührungsempfindlichen Bildschirm oder Knopf und zusätzlich Eingaben durch Bewegungen der Eingabeeinheit oder der Eingabeeinheiten möglich sind. Auf der anderen Seite stehen die möglichen Aktionen, die die Steuer- und Verarbeitungseinheit 3 ausführen kann. Dazu zählen zum Beispiel: Modifizieren der Anzeige des berührungsempfindlichen Bildschirms 2, modifizieren der Anzeige der Eingabeeinheit 1, 1' oder der Eingabeeinheiten, Datenaustausch zwischen Eingabeeinheit 1, 1' und Steuer- und Verarbeitungseinheit 3. Bei mehreren aufgelegten Eingabeeinheiten 1, 1'sind auch Aktionen möglich, bei denen Daten zwischen zwei oder mehr Eingabeeinheiten 1, 1', die jeweils mit der Steuer- und Verarbeitungseinheit 3 gekoppelt sind, ausgetauscht werden. Jede der Aktionen kann dabei basierend auf jeder der Eingaben ausgeführt werden.

Derartige Eingaben und Aktionen sind typischerweise dann möglich, wenn die Eingabeeinheit auf dem Bildschirm abgelegt wurde oder wenn der Kopplungsmodus durch Auflegen hergestellt und nicht durch eine vorgesehene Aktion beendet wurde.

Der Aspekt des Auflegens auf einen Bildschirm kann dabei als Sicherheitsfunktion dienen.

Die Figuren 4a und b zeigen Schwarzweißbilder, in denen erste Sensorsignale der kapazitiven Sensoren eines berührungsempfindlichen Bildschirms ortsaufgelöst dargestellt werden. Ein kapazitives Gitter des berührungsempfindlichen Bildschirms aus orthogonal zueinander angeordneten elektrischen Detektionsleiterbahnen ist durch weiße Linien auf schwarzem Grund angedeutet. Die horizontalen Detektionsleiterbahnen befinden sich dabei in einer ersten Ebene und die vertikalen Detektionsleiterbahnen in einer zweiten, davon beabstandeten Ebene, so dass an den Kreuzungspunkten zwischen den horizontalen und den vertikalen Linien (die eine Projektion der Detektionsleiterbahnenebenen aufeinander darstellen) eine Kapazität gemessen werden kann. Wird ein Finger oder eine leitende Struktur einer aufgelegten Eingabeeinheit in die Nähe des Gitters gebracht, so verändert sich die Kapazität an Kreuzungspunkten, die in dem Bereich liegen, in dem die Kontaktierung bzw. Annäherung stattfindet. Die Kreuzungspunkte stellen also die Pixel dar, an denen ortsaufgelöst Kapazitätsänderungen detektiert werden können. In den Figuren ist ein Ausschnitt des Bildschirms gezeigt, in dem eine Eingabeeinheit abgelegt wurde. Dort, wo die Eingabeeinheit abgelegt wurde, wird an einigen Kreuzungspunkten eine Kapazitätsveränderung registriert, die in den Bildern durch weiße Einfärbung eines quadratischen Bereichs um den jeweiligen Kreuzungspunkt kenntlich gemacht wird, wenn sie einen bestimmten Schwellwert übersteigt. So kann ein Ort, an dem die Eingabeeinheit auf den Bildschirm gelegt wurde, detektiert werden. Der Ort ist insbesondere sowohl aus der Figur 4a, als auch aus der Figur 4b entnehmbar.

Es sei erwähnt, dass diese Art der Detektion typischerweise eine Kopplung der leitenden Struktur mit Masse voraussetzt. Die Kopplung kann hierbei z. B. über den Körper eines Benutzers erfolgen. Eine Detektion kann jedoch auch bei passiven Eingabeeinheiten erfolgen, also wenn die Eingabeeinheit nicht berührt wird. Da bis auf eine horizontale und eine vertikale Detektionsleiterbahn des genannten Gitters z.B. benachbarte Detektionsleiterbahnen auf Masse liegen, ist eine Ableitung auch möglich, wenn sich ein Bereich der leitenden Struktur auf einer Detektionsleiterbahn befindet, die auf Masse liegt. Da sich leitende Strukturen 1.6 bei typischen Eingabeeinheiten 1 über einen großen Bereich der Eingabeeinheit erstrecken, ist es für eine zuverlässige Detektion durch den berührungsempfindlichen Bildschirm nicht mehr notwendig, dass das Eingabeelement durch einen Benutzer angefasst wird

Für die vorliegende Erfindung ist es von Relevanz, dass außer einem Ort einer solchen Kapazitätsänderung auch ihre Größe detektierbar ist, um ein Kapazitätsmuster für die leitende Struktur 1.6 der Eingabeeinheit 1 erstellen zu können, welches eine ortsaufgelöste Darstellung mindestens zwei verschieden großer Kapazitätsänderungen oder mindestens drei paarweise verschieden großer Kapazitätswerte oder davon abgeleiteter Größen enthält.

Dies geschieht beispielsweise, indem zur Detektion der Kapazitätsänderungen unterschiedliche Schwellenwerte verwendet werden, so dass ein Signal zum Beispiel bei 10 %, 20 %, 30 %, ... 100 % eines maximalen Wertes ausgelöst wird. Im Sinne dieser Anmeldung werden mindestens zwei solcher Schwellenwerte verwendet.

Figur 4a zeigt ein Bild, das bei einem Schwellenwert von 1 pF aufgenommen wurde und Figur 4b ein Bild, das bei einem Schwellenwert von 2,5 pF aufgenommen wurde. Das entspricht 10 % bzw. 25 % einer typischen durch einen Finger verursachten Kapazitätsänderung von 10 pF, die hier als Maximalwert verwendet wird.

Das heißt, für ein erstes Signal (Figur 4a), das bereits bei 10 % des maximalen Wertes ausgelöst wird, ist nur eine sehr geringe Kapazitätsänderung nötig. Diese wird an fast allen Stellen, an denen die Eingabeeinheit 1 den Bildschirm kontaktiert, hervorgerufen, da selbst schwach leitende Teile der leitenden Struktur 1.6, oder solche, die weit weg von der den Bildschirm kontaktierenden Unterseite 1.5 der Eingabeeinheit liegen, noch ausreichend stark mit dem kapazitiven Gitter interagieren. Demnach gibt das Bild aus Figur 4a den Umriss der gesamten Eingabeeinheit wieder. Es kann somit zur Positionsbestimmung herangezogen werden, aber gibt keinen Aufschluss über die Innere Struktur. Es ist beispielsweise nicht ersichtlich, wo oben und unten ist und ob die Eingabeeinheit auf der Vorderseite oder auf der Rückseite liegt. Ferner kann nicht festgestellt werden, um welche Art von Eingabeeinheit, z.B. um welches Handymodell, es sich handelt.

Das zweite Signal (Figur 4b) hingegen, wird erst ausgelöst, wenn Kapazitätsveränderungen von mindestens 2,5 pF vorliegt. Das bedeutet, dass die Kapazitätsänderung z.B. nur von gut leitenden Materialien, die sich in Schichten nahe der Rückseite der Eingabeeinheit befinden, verursacht wird. Dadurch ergibt sich ein differenzierteres Bild. Die leitende Struktur 1.6 löst bei diesem Schwellenwert ein Signal in zwei voneinander getrennten Bereichen aus. Ein erster, kleinerer Bereich, in dem Kapazitätsänderungen mit mindestens der angegebenen Größe vorliegen, liegt räumlich getrennt unterhalb eines zweiten, größeren Bereichs, in dem derartige Kapazitätsänderungen ausgelöst werden. Dadurch ist eine Symmetrie gebrochen und es kann neben der Position auch die Orientierung der Eingabeeinheit analysiert werden. Es kann beispielsweise durch einen Abgleich mit Daten aus dem Speicher der Steuer- und Verarbeitungseinheit 3 festgestellt werden, dass sich eine Oberseite der Eingabeeinheit 1 oben befindet oder es kann zumindest registriert werden, dass oben und unten bei der vorliegenden Eingabeeinheit unterschiedlich sind, und sich nach einer Drehung um 180° nicht das gleiche Bild ergibt. Diese Information ist auch dann hilfreich, wenn zum Erfassen von Bewegungen zusätzlich die Beschleunigungssensoren der Eingabeeinheit 1 herangezogen werden, da dadurch eine Redundanz erreicht werden kann, die für verschiedene Anwendungen nützlich ist.

Die Steuer- und Verarbeitungseinheit kann das Kapazitätsmuster wie erwähnt mit vorbekannten Kapazitätsmustern vergleichen, um beispielsweise eine Eingabeeinheit 1 oder ihren Bautyp zu identifizieren. Die Erkennung kann beispielsweise mit Methoden des maschinellen Lernens antrainiert sein. Dabei ist zu beachten, dass eine Identifikation typischerweise nicht nur auf Absolutwerten der Kapazitätsänderungen basieren kann, da der Absolutwert davon abhäng, ob die Eingabeeinheit berührt wird, wo sie auf dem Bildschirm liegt und wie sie orientiert ist.

Ist das Kapazitätsmuster erfasst, kann die Steuer- und Verarbeitungseinheit seine Bewegungen, also bspw. Rotationen und/oder Translationen auf dem Bildschirm verfolgen anhand der ersten Sensordaten. Das kann insbesondere im Kopplungsmodus geschehen und umfasst typischerweise ein Auswerten und Vergleichen der ersten und der zweiten Sensordaten

Die Figuren 4a und 4b bilden zusammengenommen also ein mögliches Kapazitätsmuster im Sinne dieser Anmeldung. Anstatt in zwei getrennten Schwarzweißbildern, wie in Figur 4a und Figur 4b dargestellt, kann der gleiche Informationsgehalt z.B. auch in einem einzigen Graustufenbild dargestellt werden.

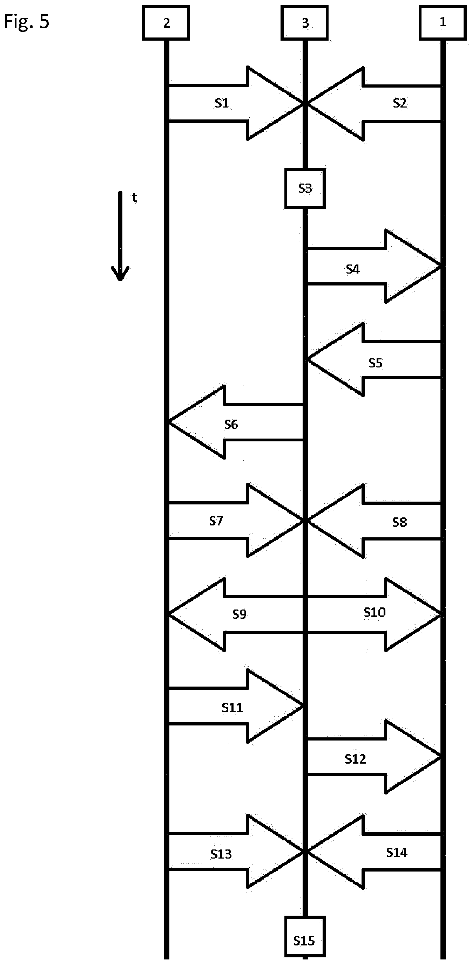

Figur 5 zeigt schematisch Schritte S1 bis S15 eines Verfahrens zur Verwendung eines berührungsempfindlichen Bildschirms, bzw. des vorstehend beschriebenen Systems. Der dort beschriebene Ablauf stellt einen beispielhaften Ablauf dar, in dem mögliche Interaktionen dargestellt werden, die Eingaben und ausgeführte Aktionen umfassen. Zahlreiche weitere Möglichkeiten lassen sich daraus ableiten. Die dort beschriebenen möglichen Aktionen können insbesondere auch von jeder anderen der dort gezeigten möglichen Eingaben ausgelöst werden.

Ein zeitlicher Ablauf der Schritte wird durch einen Pfeil mit der Beschriftung t angedeutet, die oben stehenden Schritte werden demnach zuerst ausgeführt.

In der Figur wird die Interaktion, wie etwa ein Ansteuern oder Datenaustausch zwischen dem berührungsempfindlichen Bildschirm 2, der Steuer- und Verarbeitungseinheit 3 und der Eingabeeinheit 1 durch Pfeile dargestellt, die die mit 1, 2 und 3 markierten Linien verbinden.

In einem ersten Schritt S1 werden Kapazitätsänderungen durch kapazitive Sensoren des berührungsempfindlichen Bildschirms 2 zeit- und ortsaufgelöst detektiert und entsprechende erste Sensordaten an die Steuer- und Verarbeitungseinheit 3 übermittelt, dort empfangen und gespeichert.

In einem Schritt S2 wird ein Ablegen der Eingabeeinheit 1 mittels Beschleunigungssensoren der Eingabeeinheit 1 zeitaufgelöst detektiert und es werden entsprechende zweite Sensordaten an die Steuer- und Verarbeitungseinheit 3 übermittelt, dort empfangen und gespeichert.

Die Steuer- und Verarbeitungseinheit überprüft dann in Schritt S3 einen zeitlichen Verlauf der ersten und die zweiten Sensordaten dahingehend, ob die Eingabeeinheit tatsächlich auf den berührungsempfindlichen Bildschirm gelegt wurde, also ob das Ablegen und das Auflegen gleichzeitig erfolgt sind. Ist dies, wie hier durch die Position der Pfeile S1 und S2 angedeutet, der Fall, erstellt und speichert die Steuer- und Verarbeitungseinheit aus den in S1 übertragenen ersten Sensordaten ein Kapazitätsmusters für die leitende Struktur der Eingabeeinheit, wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält. In dem Schritt kann das Kapazitätsmuster auch mit vorbekannten Kapazitätsmustern verglichen werden. Außerdem wird üblicherweise eine Position und Orientierung der Eingabeeinheit aus den in S1 übertragenen ersten Sensordaten ermittelt.

In Schritt S4 stellt die Steuer- und Verarbeitungseinheit dann einen Kopplungsmodus mit der Eingabeeinheit her, indem sie Daten an diese sendet.

In S5 empfängt die Steuer- und Verarbeitungseinheit 3 Daten von der Eingabeeinheit 1. Diese können auch das Herstellen des Kopplungsmodus betreffen oder sie können auf Eingabe des berührungsempfindlichen Bildschirms der Eingabeeinheit basieren, oder es können Speicherdaten übertragen werden.

In Schritt S6 interagiert die Steuer- und Verarbeitungseinheit 3 mit dem berührungsempfindlichen Bildschirm 2, indem sie diesen ansteuert und dort zum Beispiel anzeigt, dass der Kopplungsmodus hergestellt wurde.

In Schritt S7 empfängt die Steuer- und Verarbeitungseinheit 3 erste Sensordaten, die aufgrund zu einer Bewegung der Eingabeeinheit 1 auf dem berührungsempfindlichen Bildschirm gehören.

Gleichzeitig mit Schritt S7 empfängt die Steuer- und Verarbeitungseinheit 3 in S8 zweite Sensordaten von der Eingabeeinheit 1, die zu derselben Bewegung gehören.

Es sei angemerkt, dass es auch möglich ist, dass eine wie in S7 und S8 detektierte Bewegung nur durch einen der Sensoren erfasst wird, dass also S7 aber nicht S8, oder S8 aber nicht S7 ausgeführt wird. Dann kann die beschriebene doppelte Detektionsmöglichkeit als Sicherheitsfunktion dienen, dass die Bewegung trotzdem registriert wird.

Die Bewegung aus den Schritten S7 und S8 wird durch die Steuer- und Verarbeitungseinheit verfolgt und ist im vorliegenden Beispiel als Befehl interpretierbar, aufgrund dessen die Steuer- und Verarbeitungseinheit in Schritt S9 den berührungsempfindlichen Bildschirm 2 ansteuert und in Schritt S10 den optionalen berührungsempfindlichen Bildschirm 1.1 der Eingabeeinheit ansteuert. Die Schritte S9 und S10 können dabei gleichzeitig oder in beliebiger Reihenfolge nacheinander erfolgen.

In Schritt S11 erfolgt eine Eingabe in den berührungsempfindlichen Bildschirm mit einem Finger. Dieser wird von der Steuer- und Verarbeitungseinheit registriert und als Befehl interpretiert, den Schritt S12 auszulösen. In S12 werden vorgespeicherte Daten aus dem Speicher der Steuer- und Verarbeitungseinheit 3 in den Speicher der Eingabeeinheit 1 kopiert.

In S13 werden erste Sensordaten an die Steuer- und Verarbeitungseinheit übermittelt, die einem Abheben zuordenbar sind. Zeitgleich werden in S14 die entsprechenden zweiten Sensordaten von der Eingabeeinheit übermittelt. Analog zu oben (S7, S8) kann auch hier wieder nur S13 oder nur S14 ausgeführt werden, um ein Abheben zu detektieren. In Schritt S15 beendet oder verändert die Steuer- und Verarbeitungseinheit nach Interpretation dieser Daten aufgrund des erfolgten Abhebens den Kopplungsmodus.

### Bezugszeichenliste

- 1, 1': Eingabeeinheit
- 1.1: Berührungsempfindlicher Bildschirm der Eingabeeinheit
- 1.2: Knopf der Eingabeeinheit
- 1.3: Gehäuse der Eingabeeinheit
- 1.4: Vorderseite der Eingabeeinheit
- 1.5: Rückseite der Eingabeeinheit
- 1.6: Leitende Struktur der Eingabeeinheit

- 2: Berührungsempfindlicher Bildschirm

- 3: Steuer- und Verarbeitungseinheit

- a: Ausschnitt aus der Rückseite der Eingabeeinheit

- A: Kommunikationsverbindung zwischen berührungsempfindlichem Bildschirm und Steuer- und Verarbeitungseinheit
- B, B': Drahtloskommunikationsverbindung zwischen der Eingabeeinheit und Steuer- und Verarbeitungseinheit

## Patentansprüche

1. Steuer- und Verarbeitungseinheit (3) für einen berührungsempfindlichen Bildschirm (2), eine Kommunikationseinheit und einen Speicher umfassend, wobei die Steuer- und Verarbeitungseinheit (3) eingerichtet ist zum
- Empfangen von ersten Sensordaten, die mittels kapazitiver Sensoren des berührungsempfindlichen Bildschirms (2) generiert werden,
- Empfangen von zweiten Sensordaten, die von einer Eingabeeinheit (1) an die Steuer- und Verarbeitungseinheit (3) übermittelt werden, wobei die zweiten Sensordaten Daten eines Sensors der Eingabeeinheit (1) umfassen, der dazu ausgebildet ist, ein Ablegen der Eingabeeinheit (1) zu detektieren,
- Überprüfen anhand eines zeitlichen Verlaufs der ersten und zweiten Sensordaten, ob zeitgleich mit einem Auflegen eines Objekts mit einer leitenden Struktur auf den berührungsempfindlichen Bildschirm (2) ein Ablegen der Eingabeeinheit (1) detektiert wurde, um festzustellen, ob die Eingabeeinheit (1) auf dem berührungsempfindlichen Bildschirm (2) abgelegt wurde,
- Erstellen und Speichern eines Kapazitätsmusters für die leitende Struktur (1.6) der Eingabeeinheit (1), wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält,
- Herstellen eines Kopplungsmodus für die Eingabeeinheit (1) durch Senden von Daten an die Eingabeeinheit (1) oder durch Senden von Daten an und Empfangen von Daten von der Eingabeeinheit (1), wenn das Auflegen und das Ablegen gleichzeitig detektiert wurden.

2. Steuer- und Verarbeitungseinheit (3) gemäß Anspruch 1, eingerichtet zum Bestimmen einer Position der Eingabeeinheit (1) auf dem berührungsempfindlichen Bildschirm (2), wenn die Eingabeeinheit (1) auf dem berührungsempfindlichen Bildschirm (2) abgelegt wurde.

3. Steuer- und Verarbeitungseinheit (3) gemäß einem der vorhergehenden Ansprüche, eingerichtet zum Vergleichen des Kapazitätsmusters der Eingabeeinheit (1) mit vorbekannten Kapazitätsmustern.

4. Steuer- und Verarbeitungseinheit (3) gemäß einem der vorhergehenden Ansprüche, eingerichtet zur Bestimmung einer Orientierung der Eingabeeinheit (1) aus dem Kapazitätsmuster der Eingabeeinheit (1).

5. Steuer- und Verarbeitungseinheit (3) gemäß einem der vorhergehenden Ansprüche, eingerichtet zur Verfolgung von Rotationen und/oder Translationen der Eingabeeinheit (1) auf dem berührungsempfindlichen Bildschirm (2), wenn die Eingabeeinheit (1) auf dem berührungsempfindlichen Bildschirm (2) abgelegt wurde, durch Auswerten der ersten und/oder der zweiten Sensordaten, insbesondere durch Vergleichen der ersten und der zweiten Sensordaten.

6. Steuer- und Verarbeitungseinheit (3) gemäß einem der vorhergehenden Ansprüche, eingerichtet zum drahtlosen Datenaustausch (B, B') zwischen dem Speicher der Steuer- und Verarbeitungseinheit (3') und einem Speicher der Eingabeeinheit (1), wenn die Eingabeeinheit (1) auf dem berührungsempfindlichen Bildschirm (2) abgelegt wurde.

7. Steuer- und Verarbeitungseinheit (3) gemäß einem der vorhergehenden Ansprüche, eingerichtet zum Empfangen der zweiten Sensordaten, die von der Eingabeeinheit (1) an die Steuer- und Verarbeitungseinheit (3) übermittelt werden, wobei die zweiten Sensordaten Daten eines Beschleunigungssensors und/oder eines Gyroskops und/oder eines Abstandssensors und/oder eines Farbsensors und/oder eines GPS-Systems der Eingabeeinheit umfassen.

8. Steuer- und Verarbeitungseinheit (3) gemäß einem der vorhergehenden Ansprüche, eingerichtet, den berührungsempfindlichen Bildschirm (2) basierend auf den ersten und/oder zweiten Sensordaten anzusteuern und/oder Eingabesignale des berührungsempfindlichen Bildschirms (2) zu empfangen.

9. Steuer- und Verarbeitungseinheit (3) gemäß einem der vorhergehenden Ansprüche, eingerichtet, einen berührungsempfindlichen Bildschirm (1.1) der Eingabeeinheit (1) anzusteuern und/oder Eingabesignale des berührungsempfindlichen Bildschirms (1.1) der Eingabeeinheit (1) zu empfangen.

10. Steuer- und Verarbeitungseinheit (3) gemäß Anspruch 9, eingerichtet, den berührungsempfindlichen Bildschirm (2) basierend auf den Eingabesignalen des berührungsempfindlichen Bildschirms (1.1) der Eingabeeinheit (1) anzusteuern.

11. Steuer- und Verarbeitungseinheit (3) gemäß einem der vorhergehenden Ansprüche, eingerichtet zum Bestimmen eines zeitlichen Verlaufs der ersten und zweiten Sensordaten, jeweils mit einer Genauigkeit von 100 ms, bevorzugt 50 ms, besonders bevorzugt 20 ms, insbesondere mindestens 10 ms.

12. Steuer- und Verarbeitungseinheit (3) gemäß einem der vorhergehenden Ansprüche, eingerichtet zum Beenden des Kopplungsmodus, wenn die ersten Sensordaten und/oder die zweiten Sensordaten einem Abheben der Eingabeeinheit (1) zuordenbar sind.

13. Steuer- und Verarbeitungseinheit (3) gemäß einem der vorhergehenden Ansprüche, eingerichtet zum
- Empfangen von weiteren zweiten Sensordaten mindestens einer weiteren Eingabeeinheit (1'), die von der mindestens einen weiteren Eingabeeinheit (1') an die Steuer- und Verarbeitungseinheit (3) übermittelt werden, wobei die zweiten Sensordaten Daten eines Sensors der mindestens einen weiteren Eingabeeinheit (1') umfassen, der dazu ausgebildet ist, ein Ablegen der mindestens einen weiteren Eingabeeinheit (1') zu detektieren,
- Überprüfen anhand eines zeitlichen Verlaufs der ersten Sensordaten und der weiteren zweiten Sensordaten, ob zeitgleich mit einem Auflegen eines weiteren Objekts mit einer leitenden Struktur auf den Bildschirm ein Ablegen der mindestens einen weiteren Eingabeeinheit (1') detektiert wurde, um festzustellen, ob die mindestens eine weitere Eingabeeinheit (1') auf dem berührungsempfindlichen Bildschirm (2) abgelegt wurde,
- Erstellen und Speichern eines Kapazitätsmusters für die leitende Struktur der weiteren Eingabeeinheit (1'),
- wenn das Auflegen und das Ablegen gleichzeitig detektiert wurden, Herstellen eines Kopplungsmodus für die mindestens eine weitere Eingabeeinheit (1') durch Senden von Daten an die mindestens eine weitere Eingabeeinheit (1') oder durch Senden von Daten an und Empfangen von Daten von der mindestens einen weiteren Eingabeeinheit (1').

14. System mit einem berührungsempfindlichen Bildschirm (2), einer Steuer- und Verarbeitungseinheit (3) und einer Eingabeeinheit (1), wobei
- der berührungsempfindliche Bildschirm (2) kapazitive Sensoren zur Erhebung erster Sensordaten umfasst,
- die Eingabeeinheit (1) eine leitende Struktur (1.6) umfasst, die bei einem Auflegen der Eingabeeinheit (1) auf einen berührungsempfindlichen Bildschirm (2) Kapazitätsänderungen verursacht, die durch die kapazitiven Sensoren des berührungsempfindlichen Bildschirms (2) detektierbar sind,
- die Eingabeeinheit (1) einen Sensor zur Erhebung zweiter Sensordaten umfasst, wobei der Sensor dazu ausgebildet ist, ein Ablegen der Eingabeeinheit (1) zu detektieren,
- die Eingabeeinheit (1) dazu eingerichtet ist, die zweiten Sensordaten an die Steuer- und Verarbeitungseinheit (3) zu übermitteln,
- die Steuer- und Verarbeitungseinheit (3) dazu eingerichtet ist, anhand eines zeitlichen Verlaufs der ersten und zweiten Sensordaten zu überprüfen, ob zeitgleich mit einem Auflegen eines Objekts mit einer leitenden Struktur auf den berührungsempfindlichen Bildschirm (2) ein Ablegen der Eingabeeinheit (1) detektiert wurde, um festzustellen, ob die Eingabeeinheit (1) auf dem berührungsempfindlichen Bildschirm (2) abgelegt wurde, und dazu eingerichtet ist, ein Kapazitätsmuster für die leitende Struktur (1.6) der Eingabeeinheit (1) zu erstellen und zu speichern, wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält,
- die Steuer- und Verarbeitungseinheit (3) und die Eingabeeinheit (1) dazu eingerichtet sind, durch einen Austausch von Daten einen Kopplungsmodus herzustellen, wenn das Auflegen und das Ablegen gleichzeitig detektiert wurden.

15. Verfahren zur Verwendung eines berührungsempfindlichen Bildschirms (2), zumindest die folgenden Schritte umfassend:
- Detektieren von Kapazitätsänderungen durch kapazitive Sensoren eines berührungsempfindlichen Bildschirms (2), wobei die Kapazitätsänderungen durch eine leitende Struktur eines auf den berührungsempfindlichen Bildschirm (2) aufgelegten Objekts verursacht werden,
- Detektieren eines Ablegens einer Eingabeeinheit (1) mittels Sensoren der Eingabeeinheit,
- Überprüfen, ob zeitgleich mit einem Auflegen des Objekts mit der leitenden Struktur auf den berührungsempfindlichen Bildschirm (2) ein Ablegen der Eingabeeinheit (1) detektiert wurde, um festzustellen, ob es sich bei der detektierten leitenden Struktur um eine leitende Struktur (1.6) der Eingabeeinheit (1) handelt, und ob die Eingabeeinheit (1) auf dem Bildschirm (2) abgelegt wurde,
- Erstellen und Speichern eines Kapazitätsmusters für die leitende Struktur (1.6) der Eingabeeinheit (1), wobei das Kapazitätsmuster eine ortsaufgelöste Darstellung mindestens zwei verschieden großer Kapazitätsänderungen oder mindestens drei paarweise verschieden großer Kapazitätswerte oder davon abgeleiteter Größen enthält,
- Herstellen eines Kopplungsmodus zwischen einer Steuer- und Verarbeitungseinheit (3) des berührungsempfindlichen Bildschirms (2) und der Eingabeeinheit (1) durch einen Austausch von Daten zwischen der Steuer- und Verarbeitungseinheit (3) und der Eingabeeinheit (1), wenn das Auflegen und das Ablegen gleichzeitig detektiert wurden.

## Claims

1. A control and processing unit (3) for a touch-sensitive screen (2), comprising a communication unit and a memory, wherein the control and processing unit (3) is configured for
- receiving first sensor data which is generated by way of capacitive sensors of the touch-sensitive screen (2),
- receiving second sensor data which is transferred from an input unit (1) to the control and processing unit (3), wherein the second sensor data comprises data of a sensor of the input unit (1), said sensor being designed to detect a putting-down of the input unit (1),
- examining, on the basis of a temporal sequence of the first and second sensor data, whether a putting-down of the input unit (1) has been detected simultaneously with a placing of an object with a conductive structure onto the touch-sensitive screen (2), in order to ascertain whether the input unit (1) has been put down on the touch-sensitive screen (2),
- creating and storing a capacitance pattern for the conductive structure (1.6) of the input unit (1), wherein the capacitance pattern comprises a locally resolved representation of at least two capacitance changes of different amounts or of at least three capacitance values of different amounts in pairs or variables which are derived therefrom,
- creating a coupling mode for the input unit (1) by way of sending data to the input unit and/or receiving data from the input unit (1), if the placing-on and the putting-down have been detected simultaneously.

2. A control and processing unit (3) according to claim 1, configured for determining a position of the input unit (1) on the touch-sensitive screen (2) if the input unit (1) has been put down on the touch-sensitive screen (2).

3. A control and processing unit (3) according to one of the preceding claims, configured for comparing the capacitance pattern of the input unit (1) with already known capacitance patterns.

4. A control and processing unit (3) according to one of the preceding claims, configured for determining an orientation of the input unit (1) from the capacitance pattern of the input unit (1).

5. A control and processing unit (3) according to one of the preceding claims, configured for tracking rotations and/or translations of the input unit (1) on the touch-sensitive screen (2) if the input unit (1) has been put down on the touch-sensitive screen (2), by way of evaluating the first and/or second sensor data, in particular by way of comparing the first and the sensor data.

6. A control and processing unit (3) according to one of the preceding claims, configured for the wireless data exchange (B, B') between the memory of the control and processing unit (3') and a memory of the input unit (1), if the input unit (1) has been put down on the touch-sensitive screen (2).

7. A control and processing unit (3) according to one of the preceding claims, configured for receiving second sensor data which is transferred from the input unit (1) to the control and processing unit (3), wherein the second sensor data comprises data of an acceleration sensor and/or of a gyroscope and/or of a distance sensor and/or of a color sensor and/or of a GPS system of the input unit.

8. A control and processing unit (3) according to one of the preceding claims, configured to activate the touch-sensitive screen (2) on the basis of the first and/or second sensor data and/or to receive input signals of the touch-sensitive screen (2).

9. A control and processing unit (3) according to one of the preceding claims, configured to activate a touch-sensitive screen (1.1) of the input unit (1) and/or to receive input signals of the touch-sensitive screen (1.1) of the input unit (1).

10. A control and processing unit (3) according to claim 9, configured to activate the touch-sensitive screen (2) on the basis of the input signals of the touch-sensitive screen (1.1) of the input unit (1).

11. A control and processing unit (3) according to one of the preceding claims, configured for determining a temporal sequence of the first and the second sensor data, each with an accuracy of 100 ms, preferably 50 ms, particularly preferably 20 ms, in particular at least 10 ms.

12. A control and processing unit (3) according to one of the preceding claims, configured for ending the coupling mode if the first sensor data and/or the second sensor data can be attributed to a picking-up of the input unit (1).

13. A control and processing unit (3) according to one of the preceding claims, configured for
- receiving further second sensor data of at least one further input unit (1') which is transferred from the at least one further input unit (1') to the control and processing unit (3), wherein the second sensor data comprises data of a sensor of the at least one further input unit (1'), said sensor being designed to detect a putting-down of the at least one further input unit (1'),
- examining on the basis of the temporal sequence of the first sensor data and of the further second data as to whether a putting-down of the at least one further input unit (1') has been detected simultaneously with a placing of a further object with a conductive structure onto the screen, in order to determine whether the at least one further input (1') has been put down on touch-sensitive screen (2),
- creating and storing a capacitance pattern for the conductive structure of the further input unit (1'),
- if the placing-on and the putting-down have been detected simultaneously, creating a coupling mode for the at least one further input unit (1') by way of sending data to the at least one further input unit (1') or by way of sending data to and receiving data from the at least one further input unit (1').

14. A system with a touch-sensitive screen (2), a control and processing unit (3) and an input unit (1), wherein
- the touch-sensitive screen (2) comprises capacitive sensors for gathering first sensor data,
- the input unit (1) comprises a conductive structure (1.6) which on placing the input unit (1) onto a touch-sensitive screen (2) induces capacitance changes which are detectable by the capacitive sensors of the touch-sensitive screen (2),
- the input unit (1) comprises a sensor for gathering second sensor data, wherein the sensor is designed to detect a putting-down of the input unit (1),
- the input unit (1) is configured to transfer the second sensor data to the control and processing unit (3),
- the control and processing unit (3) is configured to examine, on the basis of a temporal sequence of the first and second sensor data, whether a putting-down of the input unit (1) has been detected simultaneously with the placing of an object with a conductive structure onto the touch-sensitive screen (2), in order to ascertain whether the input unit (1) has been put down on the touch-sensitive screen (2), and is configured to create and store a capacitance pattern for the conductive structure (1.6) of the input unit (1), wherein the capacitance pattern comprises a spatially resolved representation of at least two capacitance changes of different amounts or at least three capacitance values of different amounts in pairs or variables which are derived therefrom,
- the control and processing unit (3) and the input unit (1) are configured to create a coupling mode by way of an exchange of data, if the placing-on and putting-down have been detected simultaneously.

15. A method for the use of a touch-sensitive screen (2), comprising at least the following steps:
- detecting capacitance changes by way of capacitive sensors of a touch-sensitive screen (2), wherein the capacitance changes are caused by a conductive structure of an object which is placed onto the touch-sensitive screen (2),
- detecting a putting-down of an input unit (1) by way of sensors of the input unit,
- examining whether a putting-down of the input unit (1) has been detected simultaneously with a placing of the object with the conductive structure onto the touch-sensitive screen (2), in order to ascertain whether the detected conductive structure is a conductive structure (1.6) of the input unit (1) and whether the input unit (1) has been put down on the screen (2),
- creating and storing a capacitance pattern for the conductive structure (1.6) of the input unit (1), wherein the capacitance pattern comprises a locally resolved representation of at least two capacitance changes of different amounts or of at least three capacitance values of different amounts in pairs or variables which are derived therefrom,
- creating a coupling mode between a control and processing unit (3) of the touch-sensitive screen (2) and the input unit (1) by way of an exchange of data between the control and processing unit (3) and the input unit (1) if the placing-on and the putting-down have been simultaneously detected.

## Revendications

1. Unité de commande et de traitement (3) pour un écran tactile (2), comprenant une unité de communication et une mémoire, où l'unité de commande et de traitement (3) est conçue pour
- la réception de premières données de capteur, qui sont générées au moyen de capteurs capacitifs de l'écran tactile (2),
- la réception de deuxièmes données de capteur, qui sont transmises par une unité d'entrée (1) à l'unité de commande et de traitement (3), les deuxièmes données de capteur comprenant des données d'un capteur de l'unité d'entrée (1), qui est conçu pour détecter un dépôt de l'unité d'entrée (1),
- la vérification, à l'aide d'un déroulement chronologique des premières et deuxièmes données de capteur, si simultanément à une mise en place d'un objet avec une structure conductrice sur l'écran tactile (2), un dépôt de l'unité d'entrée (1) a été détectée, afin de constater si l'unité d'entrée (1) a été déposée sur l'écran tactile (2),
- l'établissement et le stockage d'un modèle capacitif pour la structure conductrice (1.6) de l'unité d'entrée (1), où le modèle capacitif contient une représentation résolue spatialement d'au moins deux variations de capacités de différente taille ou d'au moins trois valeurs de capacités de taille différente par paires, ou de grandeurs en étant dérivées,
- l'élaboration d'un mode de couplage pour l'unité d'entrée (1) par l'envoi de données à l'unité d'entrée (1) ou par l'envoi de données en direction et la réception de données provenant de l'unité d'entrée (1), lorsque la mise en place et le dépôt ont été détectées simultanément.

2. Unité de commande et de traitement (3) selon la revendication 1, conçue pour la détermination d'une position de l'unité d'entrée (1) sur l'écran tactile (2), lorsque l'unité d'entrée (1) a été entrée sur l'écran tactile (2).

3. Unité de commande et de traitement (3) selon l'une des revendications précédentes, conçue pour la comparaison du modèle capacitif de l'unité d'entrée (1) avec des modèles capacitifs connus préalablement.

4. Unité de commande et de traitement (3) selon l'une des revendications précédentes, conçue pour la détermination d'une orientation de l'unité d'entrée (1) à partir du modèle capacitif de l'unité d'entrée (1).

5. Unité de commande et de traitement (3) selon l'une des revendications précédentes, conçue pour le suivi de rotations et/ou de translations de l'unité d'entrée (1) sur l'écran tactile (2), lorsque l'unité d'entrée (1) a été entrée sur l'écran tactile (2) par l'évaluation des premières et/ou des deuxièmes données de capteur, notamment par une comparaison des premières et des deuxièmes données de capteur.

6. Unité de commande et de traitement (3) selon l'une des revendications précédentes, conçue pour l'échange de données sans fil (B, B') entre la mémoire de l'unité de commande et de traitement (3') et une mémoire de l'unité d'entrée (1), lorsque l'unité d'entrée (1) a été entrée sur l'écran tactile (2).

7. Unité de commande et de traitement (3) selon l'une des revendications précédentes, conçue pour la réception des deuxièmes données de capteur, qui ont été transmises par l'unité d'entrée (1) à l'unité de commande et de traitement (3), où les deuxièmes données de capteur comprennent des données d'un capteur d'accélérations et/ou d'un gyroscope, et/ou d'un capteur de distance, et/ou d'un capteur de couleur, et/ou d'un système GPS de l'unité d'entrée.

8. Unité de commande et de traitement (3) selon l'une des revendications précédentes, conçue pour activer l'écran tactile (2) en se basant sur les premières et/ou les deuxièmes données de capteur et/ou pour réceptionner des signaux d'entrée de l'écran tactile (2).

9. Unité de commande et de traitement (3) selon l'une des revendications précédentes, conçue pour activer un écran tactile (1.1) de l'unité d'entrée (1) et/ou pour réceptionner des signaux d'entrée de l'écran tactile (1.1) de l'unité d'entrée (1).

10. Unité de commande et de traitement (3) selon la revendication 9, conçue pour activer l'écran tactile (2) en se basant sur les signaux d'entrée de l'écran tactile (1.1) de l'unité d'entrée (1).

11. Unité de commande et de traitement (3) selon l'une des revendications précédentes, conçue pour la détermination d'un déroulement chronologique des premières et des deuxièmes données de capteur, respectivement avec une précision de 100 ms, de préférence de 50 ms, de manière particulièrement préférée de 20 ms, notamment d'au moins 10 ms.

12. Unité de commande et de traitement (3) selon l'une des revendications précédentes, conçue pour terminer le mode de couplage, lorsque les premières données de capteur et/ou les deuxièmes données de capteur peuvent être attribuées à une entrée de l'unité d'entrée (1).

13. Unité de commande et de traitement (3) selon l'une des revendications précédentes, conçue pour
- la réception de nouvelles deuxièmes données de capteur d'au moins une nouvelle unité d'entrée (1'), qui sont transmises de l'au moins une nouvelle unité d'entrée (1') à l'unité de commande et de traitement (3), où les deuxièmes données de capteur comprennent des données d'un capteur de l'au moins une nouvelle unité d'entrée (1'), qui est conçu pour détecter un dépôt de l'au moins une nouvelle unité d'entrée (1'),
- la vérification, à l'aide d'un déroulement chronologique des premières données de capteur et des nouvelles deuxièmes données de capteur, si simultanément avec une mise en place d'un nouvel objet avec une structure conductrice sur l'écran, un dépôt de l'au moins une nouvelle unité d'entrée (1') a été détectée, afin de constater si l'au moins une nouvelle unité d'entrée (1') a été déposée sur l'écran tactile (2),
- l'établissement et le stockage d'un modèle capacitif pour la structure conductrice de la nouvelle unité d'entrée (1'),
- si la mise en place et le dépôt ont été détectées simultanément, l'élaboration d'un mode de couplage pour l'au moins une nouvelle unité d'entrée (1') par l'envoi de données à l'au moins une nouvelle unité d'entrée (1') ou par l'envoi de données en direction et la réception de données provenant de l'au moins une nouvelle unité d'entrée (1').

14. Système doté d'un écran tactile (2), d'une unité de commande et de traitement (3) et d'une unité d'entrée (1), dans lequel
- l'écran tactile (2) comprend des capteurs capacitifs pour la collecte de premières données de capteur,
- l'unité d'entrée (1) comprend une structure conductrice (1.6), qui occasionne des variations de capacité qui sont détectables par les capteurs capacitifs de l'écran tactile(2) lors d'une entrée de l'unité d'entrée (1) sur l'écran tactile (2),
- l'unité d'entrée (1) comprend un capteur pour la collecte de deuxièmes données de capteur, où le capteur est conçu pour détecter un dépôt de l'unité d'entrée (1),
- l'unité d'entrée (1) est conçue pour transmettre les deuxièmes données de capteur à l'unité de commande et de traitement (3),
- l'unité de commande et de traitement (3) est conçue pour, à l'aide d'un déroulement chronologique des premières et des deuxièmes données de capteur, vérifier si simultanément avec une mise en place d'un objet avec une structure conductrice sur l'écran tactile (2) un dépôt de l'unité d'entrée (1) a été détectée, afin de constater si l'unité d'entrée (1) a été déposée sur l'écran tactile (2), et est conçue pour établir et stocker un modèle capacitif pour la structure conductrice (1.6) de l'unité d'entrée (1), où le modèle capacitif contient une représentation résolue spatialement d'au moins deux variations de capacité de différentes tailles ou d'au moins trois valeurs de capacité de différentes tailles par paires, ou de grandeurs en étant dérivées,
- l'unité de commande et de traitement (3) et l'unité d'entrée (1) sont conçues pour établir un mode de couplage par un échange de données, lorsque la mise en place et le dépôt ont été détectées simultanément.

15. Procédé d'utilisation d'un écran tactile (2), comprenant au moins les étapes suivantes :
- la détection de variations de capacités par des capteurs capacitifs d'un écran tactile (2), les variations de capacités étant occasionnées par une structure conductrice d'un objet placé sur l'écran tactile (2),
- la détection d'un dépôt d'une unité d'entrée (1) au moyen de capteurs de l'unité d'entrée,
- la vérification, si simultanément à la mise en place de l'objet avec la structure conductrice sur l'écran tactile (2), un dépôt de l'unité d'entrée (1) a été détectée, afin de constater qu'il s'agit, dans le cas de la structure conductrice détectée, d'une structure conductrice (1.6) de l'unité d'entrée (1), et si l'unité d'entrée (1) a été déposée sur l'écran (2),
- l'établissement et le stockage d'un modèle capacitif pour la structure conductrice (1.6) de l'unité d'entrée (1), où le modèle capacitif contient une représentation résolue spatialement d'au moins deux variations de capacités de différente taille ou d'au moins trois valeurs de capacités de taille différente par paires, ou de grandeurs en étant dérivées,
- l'élaboration d'un mode de couplage entre l'unité de commande et de traitement (3) de l'écran tactiles (2) et de l'unité d'entrée (1) par un échange de données entre l'unité de commande et de traitement (3) et l'unité d'entrée (1), lorsque la mise en place et le dépôt ont été détectées simultanément.
